# EUROPÄISCHE PATENTSCHRIFT

(11) **EP 4 077 456 B1**
(45) Veröffentlichungstag und Bekanntmachung des Hinweises auf die Patenterteilung: **03.06.2026**
(21) Anmeldenummer: 20823814.7
(22) Anmeldetag: 14.12.2020
(51) Int. Cl.: C08G 18/73, C08G 18/32, B29C 64/118, B33Y 10/00, B33Y 70/00, B33Y 80/00

(54) **ADDITIVES FERTIGUNGSVERFAHREN MIT EINEM AUFBAUMATERIAL MIT HOHEM HARTSEGMENTANTEIL**
ADDITIVE MANUFACTURING PROCESS USING A BUILDING MATERIAL HAVING A HIGH HARD SEGMENT CONTENT
PROCÉDÉ D'IMPRESSION 3D UTILISANT UN MATÉRIAU DE CONSTRUCTION AYANT UNE TENEUR ÉLEVÉE EN SEGMENTS DURS

(30) Priorität: 17.12.2019 EP 19216846
(43) Veröffentlichungstag der Anmeldung: 26.10.2022
(73) Patentinhaber: Stratasys, Inc., Eden Prairie, MN 55344 (US)
(72) Erfinder: ACHTEN, Dirk, 51375 Leverkusen (DE); BUESGEN, Thomas, 51377 Leverkusen (DE); MATNER, Mathias, 41464 Neuss (DE); METTMANN, Bettina, 50259 Pulheim (DE); GARSKA, Bernd, 50677 Köln (DE); KESSLER, Michael, 51377 Leverkusen (DE); REICHERT, Peter, 41541 Dormagen (DE); WAGNER, Roland, 51375 Leverkusen (DE); PRENVEILLE, Thomas, 27170 Ecardenville-La- Campagne (FR)
(74) Vertreter: Davepon, Björn
(86) Internationale Anmeldenummer: PCT/EP2020/085928
(87) Internationale Veröffentlichungsnummer: WO 2021/122429

(56) Entgegenhaltungen:
- EP-A1- 3 395 572
- WO-A1-2019/121277

## Beschreibung

Die vorliegende Erfindung betrifft ein additives Fertigungsverfahren mit einem Aufbaumaterial, welches einen hohen Anteil an Hartsegmenten im Polymer aufweist. Die Erfindung betrifft weiterhin einen durch das Verfahren erhältlichen Gegenstand.

Als additive Fertigungsverfahren werden solche Verfahren bezeichnet, mit denen Gegenstände schichtweise aufgebaut werden. Sie unterscheiden sich daher deutlich von anderen Verfahren zur Herstellung von Gegenständen wie Drehen, Fräsen oder Bohren. Bei letztgenannten Verfahren wird ein Gegenstand so bearbeitet, dass er durch Wegnahme von Material seine Endgeometrie erhält.

Additive Fertigungsverfahren nutzen unterschiedliche Materialien und Prozesstechniken, um Gegenstände schichtweise aufzubauen. Beim sogenannten Fused Deposition Modeling (FDM) beispielsweise wird ein thermoplastischer Kunststoffdraht verflüssigt und mit Hilfe einer Düse schichtweise auf einer beweglichen Bauplattform abgelegt. Daneben existieren additive Fertigungsverfahren, welche thermoplastische Pulver nutzen, um Gegenstände schichtweise aufzubauen. Hierbei werden über einen so genannten Beschichter dünne Pulverschichten aufgetragen und anschließend mittels einer Energiequelle selektiv aufgeschmolzen. Polyamid 12 (PA12) ist der derzeit am meisten eingesetzte Werkstoff für pulverbasierte additive Fertigungsverfahren, wie z.B. dem Lasersintern.

Polyurethane und insbesondere thermoplastische Polyurethane werden aufgrund ihrer hervorragenden physikalischen Eigenschaften seit Jahren für die unterschiedlichsten Einsatzzwecke verwendet. Trotz der breiten Verwendbarkeit von Polyurethanen gibt es Anwendungsbereiche, in denen andere Kunststoffe, wie beispielsweise Polyamid-Kunststoffe, verwendet werden, weil kaum Polyurethane mit geeigneten physikalischen Eigenschaften verfügbar sind oder diese nur schwer bereitgestellt werden können. Ein besonderes Beispiel ist der Einsatz in additiven Fertigungsverfahren, wenn Härten von ≥ 70 Shore D gefordert sind, wie sie leicht durch z.B. Polyamide oder Polyetheretherketone erhalten werden können. Hingegen sind Polyurethane in diesem Einsatzbereich typischerweise auf Härten von ≤ 70 Shore D beschränkt und werden typischerweise als eher flexible thermoplastische Elastomere eingesetzt.

Thermoplastische Polyurethane mit Härten von ≥ 70 Shore D sind bislang nur auf Basis von MDI basierten TPU mit hohen Hartsegmentanteilen verbreitet. Jedoch zeichnen diese sich durch eine hohe Verarbeitungstemperatur und Schmelzpunkte von ≥ 200 °C aus, welches besonders in Pulversinterprozessen zu großen Problemen bezüglich der Materialzersetzung und -verfärbung führt. Dieses deshalb, da in diesem Fall Sinterpulvertemperaturen in der Nähe des Schmelzpunktes gefordert sind, bei denen thermoplastische Polyurethane in der Regel nicht wärme- und/oder farbstabil sind.

Eine andere Gruppe von thermoplastischen Polyurethanen, die einen hohen Hartsegmentanteil aufweisen, sind die unter ihrer damaligen Bezeichnung Durethan U bekannten Polyurethane auf der Basis von aliphatischen Diisocyanaten.

O. Bayer (Angew. Chem. 1947, 59, 257-288) offenbart die Herstellung von Polyurethanen aus aliphatischen Diisocyanaten und aliphatischen Diolen im Batch-Verfahren, insbesondere ein Polyurethan aus Hexamethylendiisocyanat und 1,4-Butandiol (Perlon U, Igamid U), welches als feines, sandiges Pulver aus einer Fällungspolymerisation in Dichlorbenzol erhalten wird.

DE 728981 und US 2,511,544 offenbaren ein Batch-Verfahren zur Umsetzung von Diisocyanaten mit Diolen und/oder Diaminen zu Polyurethan bzw. Polyharnstoffen in einem lösungsmittelhaltigen oder lösungsmittelfreien Verfahren. Weitere beispielhafte Verfahren zur Herstellung von Polyurethanen mit hohen Hartsegmentanteilen sind beschrieben bei Korschak et al.:
Korshak, V.V., 10 - Experimental Methods of Solution Polimerization. Comprehensive Polymer Science and Supplements, 1989. Volume 5: Step Polymerization: p. p. 143-165.
Korshak, V.V., Y.A. Strepikheev, and A.F. Moiseev, Preparation of linear polyurethanes without a solvent. Reaction of hexamethylene diisocyanate with 1,4-buteanediol in a melt. Condensation polymers, 1961: p. 12-15.
Korshak, V.V. and I.A. Gribova, Communication 66. Investigation of the Kinetics of Copolymerization of Diisocyanates with Glycols. High Molecular Compounds, 1953: p. 571-57
WO 2018/197396 A1 offenbart ein Verfahren zur Herstellung eines Gegenstands mittels additivem Fertigungsverfahren.
WO 2019/121277 A1 offenbart ein additives Fertigungsverfahren unter Einsatz von Partikeln mit einem bestimmten thermoplastischen Polyurethan.

Wünschenswert wären harte thermoplastische Polyurethane für den Einsatz in additiven Herstellungsverfahren und insbesondere in Pulversinterverfahren, die sich durch eine hohe Härte in Kombination mit einem Schmelzpunkt und einer Rekristallisationstemperatur auszeichnen, die noch im für Urethane zumindest kurzzeitig stabilen Temperaturbereich von ≤ 189 °C liegt und damit Sinterprodukte mit guten mechanischen Eigenschaften und nur geringer Verfärbung ermöglichen. Eine Aufgabe der vorliegenden Erfindung ist es, mindestens einen Nachteil des Standes der Technik wenigstens zu einem Teil zu überwinden. Weiterhin stellt sich die vorliegende Erfindung die Aufgabe, ein additives Herstellungsverfahren anzugeben, mit dem Polyurethan-Aufbaumaterialien mit einem hohen Hartsegmentanteil verarbeitet werden können.

Erfindungsgemäß gelöst wird diese Aufgabe durch ein Verfahren gemäß Anspruch 1 und ein Gegenstand gemäß Anspruch 12. Vorteilhafte Weiterbildungen sind in den Unteransprüchen angegeben. Sie können beliebig kombiniert werden, sofern sich aus dem Kontext nicht eindeutig das Gegenteil ergibt.

Ein Verfahren zur Herstellung eines Gegenstands umfasst den Schritt der Herstellung des Gegenstands mittels eines additiven Fertigungsverfahrens aus einem Aufbaumaterial. Das Aufbaumaterial umfasst ein erstes Polyurethanpolymer, welches ein mittels Elementaranalyse bestimmtes Gewichtsprozent-Verhältnis von O zu N von ≥ 2 bis ≤ 2,5, ein mittels Elementaranalyse bestimmtes Gewichtsverhältnis N zu C von ≥ 0,1bis ≤ 0,25, eine mittels dynamischer Differenzkalorimetrie (differential scanning calorimetry, DSC; 2te Aufheizung mit Aufheizrate 5 K/min) bestimmte Halbwertsbreite des Schmelzpeaks von ≤ 20 K, (bevorzugt ≤ 17 K, mehr bevorzugt ≤ 15 K und besonders bevorzugt ≤ 12K) und eine mittels dynamischer Differenzkalorimetrie (differential scanning calorimetry, DSC; 2te Aufheizung) bei einer Aufheiz- und Abkühlrate von 20 K/min bestimmte Differenz aus der Schmelztemperatur und der Rekristallisationstemperatur von ≥ 5 K und ≤ 100 K aufweist.

Der herzustellende Gegenstand kann für sich alleine als Ziel des Herstellungsverfahrens dienen. Es ist aber auch möglich, dass der herzustellende Gegenstand Teil eines größeren Verbundes ist und dessen Herstellung einen Teilschritt in der Herstellung des Verbundes darstellt.

Erfindungsgemäß ist vorgesehen, dass der Gegenstand mittels eines additiven Fertigungsverfahrens ("3D-Drucken") aus einem Aufbaumaterial hergestellt wird. Das additive Fertigungsverfahren kann beispielsweise ausgewählt sein aus Schmelzschichtung (Fused Filament Fabrication, FFF oder Fused Deposition Modeling, FDM), Selective Laser Sintering, Selective Laser Melting oder High Speed Sintering, sowie Binderjetting.

Der Begriff "Schmelzschichtungsverfahren" bezeichnet ein Fertigungsverfahren aus dem Bereich der additiven Fertigung, mit dem ein Werkstück schichtweise beispielsweise aus einem schmelzfähigen Kunststoff aufgebaut wird. Der Kunststoff kann mit oder ohne weitere Zusätze wie Füllstoffe eingesetzt werden. Maschinen für das FDM/FFF gehören zur Maschinenklasse der 3D-Drucker. Dieses Verfahren basiert auf der Verflüssigung eines drahtförmigen Kunststoff- oder Wachsmaterials durch Erwärmung. Beim abschließenden Abkühlen erstarrt das Material. Der Materialauftrag erfolgt durch Extrusion mit einer in Bezug auf eine Fertigungsebene frei verfahrbaren Heizdüse. Dabei kann entweder die Fertigungsebene fix sein und die Düse ist frei verfahrbar oder eine Düse ist fix und ein Substrattisch (mit einer Fertigungsebene) kann verfahren werden oder beide Elemente, Düse und Fertigungseben, sind verfahrbar. Die Geschwindigkeit mit der Untergrund und Düse zueinander verfahrbar sind liegt bevorzugt in einem Bereich von 1 bis 500 mm/s. Die Schichtdicke liegt je nach Anwendungsfall in einem Bereich von 0,01 und 5 mm, der Austrittsdurchmesser des Materialstrahls (Düsenauslassdurchmesser) von der Düse beträgt typischerweise mindestens bei 0,01 mm.

Bei der schichtweisen Modellherstellung verbinden sich damit die einzelnen Schichten zu einem komplexen Teil. Der Aufbau eines Körpers erfolgt üblich indem wiederholt, jeweils zeilenweise eine Arbeitsebene abgefahren wird (Bildung einer Schicht) und dann die Arbeitsebene "stapelnd" nach oben verschoben wird (Bilden mindestens einer weiteren Schicht auf der ersten Schicht), sodass eine Form schichtweise entsteht. Die Austrittstemperatur der Stoffmischungen aus der Düse kann beispielsweise 80 °C bis 420 °C betragen. Es ist zudem möglich, den Substrattisch und/oder einen gegebenenfalls vorhandenen Bauraum zu beheizen, beispielsweise auf 20 °C bis 250 °C. Hierdurch kann ein zu schnelles Abkühlen der aufgetragenen Schicht verhindert werden, sodass eine weitere, hierauf aufgetragene Schicht sich ausreichend mit der ersten Schicht verbindet.

Sinterverfahren sind im Kontext der vorliegenden Erfindung Verfahren, welche insbesondere thermoplastische Pulver nutzen, um Gegenstände schichtweise aufzubauen. Hierbei werden über einen so genannten Beschichter dünne Pulverschichten aufgetragen und anschließend mittels einer Energiequelle selektiv aufgeschmolzen. Das umgebende Pulver stützt dabei die Bauteilgeometrie. Komplexe Geometrien sind dadurch wirtschaftlicher zu fertigen als beim FDM-Verfahren. Zudem können verschiedene Gegenstände eng gepackt im so genannten Pulverbett angeordnet beziehungsweise gefertigt werden. Aufgrund dieser Vorteile gelten pulverbasierte additive Fertigungsverfahren zu den wirtschaftlichsten additiven Herstellungsverfahren am Markt. Sie werden daher überwiegend von industriellen Nutzern verwendet. Beispiele für pulverbasierte additive Fertigungsverfahren sind das sogenannte Lasersintern (SLS, Selective Laser Sintering) oder das High Speed Sintering (HSS). Sie unterscheiden sich untereinander in der Methode, um die Energie für das selektive Aufschmelzen in den Kunststoff einzutragen. Beim Lasersinterverfahren erfolgt der Energieeintrag über einen gelenkten Laserstrahl. Beim so genannten High Speed Sintering (HSS)-Verfahren erfolgt der Energieeintrag über Infrarot (IR)-Strahler in Kombination mit einem selektiv in das Pulverbett gedruckten IR-Absorber. Das so genannte Selective Heat Sintering (SHS) nutzt die Druckeinheit eines konventionellen Thermodruckers, um thermoplastische Pulver selektiv aufzuschmelzen. Bevorzugt sind selektive Lasersinterverfahren (SLS).Neben dem ersten Polyurethanpolymer kann das Aufbaumaterial noch weitere thermoplastische Polymere sowie Additive wie Füllstoffe, Stabilisatoren und dergleichen enthalten. Der Gesamtgehalt an Additiven im Aufbaumaterial kann beispielsweise ≥ 0,1 Gewichts-% bis ≤ 50 Gewichts-%, bevorzugt ≥ 0,5 Gewichts-% bis ≤ 30 Gewichts-%, betragen.

Es ist erfindungsgemäß vorgesehen, dass das erste Polyurethanpolymer ein mittels Elementaranalyse bestimmtes Gewichtsprozent-Verhältnis von O zu N von ≥ 2 bis ≤ 2,5 und ein mittels Elementaranalyse bestimmtes Gewichtsverhältnis N zu C von ≥ 0,1 bis ≤0,25 aufweist. Polyurethane mit solchen Analysendaten haben einen hohen Hartsegmentanteil, das heißt einen hohen Anteil an Urethangruppen im Molekül. Sie weisen häufig eine hohe Kristallinität auf und, aufgrund der vielen Wasserstoffbrückenbindungen zwischen den Urethangruppen benachbarter Ketten, einen vergleichsweise scharf definierten Schmelzpunkt und ein definiertes Rekristallisationsverhalten auf. Dieses wird auch durch die Anforderung ausgedrückt, dass die mittels dynamischer Differenzkalorimetrie (differential scanning calorimetry, DSC; 2. Aufheizung mit Aufheizrate 5 K/min) bestimmte Halbwertsbreite des Schmelzpeaks von ≤ 20 K ( bevorzugt ≤ 17 K, besonders bevorzugt ≤ 15 K und mehr bevorzugt ≤ 12 K) und die mittels dynamischer Differenzkalorimetrie (differential scanning calorimetry, DSC; 2. Aufheizung) bei einer Aufheiz- und Abkühlrate von 20 K/min bestimmte Differenz aus der Schmelztemperatur und der Rekristallisationstemperatur von ≥ 5 K und ≤ 100 K (bevorzugt ≥ 7 K und ≤ 60 K, mehr bevorzugt ≥ 9 K und ≤ 50 K und besonders bevorzugt ≥ 10 K und ≤ 25 K) beträgt. Zur Auswertung der Schmelztemperatur und der Rekristallisationstemperatur wird dabei jeweils das Peak-Maximum herangezogen. Für die Bestimmung der Halbwertsbreite des Schmelzpeaks wird die DSC-Kurve derart ausgewertet, dass die gerade verlaufenden Anteile der Kurve, welche keine plötzliche endotherme oder exotherme Veränderung anzeigen, als Basis verwendet werden und die Halbwertsbreite als die Breite des Peaks auf halber maximaler Peakhöhe definiert ist.

Insgesamt lässt sich das erste Polyurethanpolymer als Austausch für Polyamide wie PA 12 einsetzen, wobei die Materialkosten geringer als die des Polyamids sind.

So können besonders vorteilhaft eine hohe Fließfähigkeit bei nur kurz, bevorzugt ≤ 60 Sekunden, besonders bevorzugt ≤ 30 Sekunden wirkenden hohen Temperaturen, wie zum Beispiel beim SLS Verfahren während der Einwirkung des Laser oder im FDM Prozess während der Erhitzung im Heizblock vor der Düse mit einem schnellen Viskositätsaufbau bei niedrigeren Temperatur knapp oberhalb des Schmelzpunktes kombiniert werden. Bevorzugt ist der Viskositätssprung von 190 °C zu 240°C reversibel, das heißt es werden nach Einwirkungszeit von 240 °C von max. 1 Minute ≥ 50%, bevorzugt ≥ 60% und weiter bevorzugt ≥ 70% der Ausgangsviskosität gemäß ISO 6721-10:2015-09 bei 1/s und 0,1% Deformation nach 1 Minute bei 190°C wieder erreicht.

Das erste Polyurethanpolymer im erfindungsgemäßen Verfahren wird aus einer Isocyanat-Komponente und einer gegenüber Isocyanaten reaktiven Komponente erhalten, wobei die gegenüber Isocyanaten reaktive Komponente neben Zerewitinoff-aktive H-Atome enthaltende Verbindungen auch weitere, nicht reaktive Additive enthalten kann.

Die Isocyanat-Komponente kann insbesondere aliphatische, cycloaliphatische oder araliphatischen Diisocyanate enthalten, wobei monomere Diisocyanate bevorzugt sind. Geeignete Verbindungen sind beispielsweise solche des Molekulargewichtsbereiches von ≥ 140 bis ≤ 400 g/mol, wobei es unerheblich ist, ob diese mittels Phosgenierung oder nach phosgenfreien Verfahren erhalten wurden.

Beispiele für geeignete aliphatische Diisocyanate sind 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan und 1,10-Diisocyanatodecan.

Beispiele für geeignete cycloaliphatische Diisocyanate sind 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H12MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan und 1,3-Dimethyl-5,7-diisocyanatoadamantan.

Beispiele für geeignete araliphatische Diisocyanate sind 1,3- und 1,4-Bis-(isocyanatomethyl)benzol (Xylylendiisocyanat; XDI), 1,3- und 1,4-Bis(1-isocyanato-l-methyl-ethyl)-benzol (TMXDI).

Bevorzugt werden aliphatische und cycloaliphatische Diisocyanate mit einem Molekulargewicht zwischen ≥ 140 und ≤ 400 g/mol eingesetzt, insbesondere aliphatische und cycloaliphatische Diisocyanate ausgewählt aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI) und/oder Mischungen aus mindestens 2 hieraus. Vorzugsweise werden 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, Diisocyanatooctan, 1,10-Diisocyanatodecan, 1,3- und 1,4-Diisocyanatocyclohexan, 1,3-Diisocyanato-2-methylcyclohexan, 1-Isocyanato-3,3,5-trimethyl-5-isocyanatomethyl-cyclohexan (Isophorondiisocyanat; IPDI) und/oder Mischungen aus mindestens 2 hieraus, noch bevorzugter 1,4-Diisocyanatobutan (BDI), 1,5-Diisocyanatopentan (PDI), 1,6-Diisocyanatohexan (HDI), 2-Methyl-1,5-diisocyanatopentan und/oder Mischungen aus mindestens 2 hieraus.

In einer besonderen Ausführungsform können auch difunktionelle Polyisocyanate aus Umsetzungsprodukten von Isocyanaten mit sich selber und zum Beispiel CO₂ eigesetzt werden wie zum Beispiel HDI basierte (Poly)uretdione und zum Beispiel HDI basierte (Poly) isocyanato-[poly[3-hexyl-oxadianzine-2,4,6-trione)]-5-isocyanatohexyl.

Es ist möglich, dass in der Isocyanat-Komponente Polyisocyanate auch mit einer durchschnittlichen Funktionalität von ≥ 2 vorliegen. Beispiele für geeignete Polyisocyanate sind Triphenylmethan-4,4',4"-triisocyanat oder Isocyanatomethyl-1,8-octandiisocyanat (TIN). Insbesondere können auch Derivate der zuvor genannten Diisocyanate verwendet werden. Beispiele dafür sind die handelsüblichen Trimere (Biurete, Uretdione, Allophanate oder Isocyanurate) von 1,4-Diisocyanatobutan (BDI), 1,5-Diisocyanatopentan (PDI), 1,6-Diisocyanatohexan (HDI), 1-Isocyanato-3,3,5-trimethyl-5-isocyanatomethyl-cyclohexan oder 2,4'- und 4,4'-Diisocyanatodicyclohexylmethan. Diese Polyisocyanate können bis zu einer Menge zugesetzt werden, bei der die thermoplastischen Eigenschaften des Endproduktes erhalten bleiben, beispielsweise ≤ 2 Gewichtsprozent, bevorzugt ≤ 1 Gewichtsprozent und besonders bevorzugt ≤ 0,5 Gewichtsprozent bezogen auf das Gesamtgewicht der Isocyanat-Komponente.

Die gegenüber Isocyanaten reaktive Komponente kann ein oder mehrere difunktionelle Alkohole, insbesondere aliphatische, araliphatische oder cycloaliphatische Alkohole mit Molekulargewichten kleiner 210 g/mol, enthalten. Dieses können beispielsweise sein: 1,2-Ethandiol, 1,2- und 1,3-Propandiol, die Isomeren von Butandiol, Pentandiol, Hexandiol, Heptandiol, Octandiol, Nonandiol, Decandiol, Undecandiol und Dodecandiol, 1,3-Cyclobutandiol, 1,3-Cyclopentandiol, 1,2-, 1,3- und 1,4-Cyclohexandiol, 1,4-Cyclohexandimethanol, 2-Cyclohexen-1,4-diol, 2-Methyl-1,4-cyclohexandiol, 2-Ethyl-1,4-cyclohexandiol, 2,2,4,4-Tetramethyl-1,3-cyclobutandiol, hydriertes Bisphenol A (2,2-Bis(4-hydroxycyclohexyl)propan), 1,3-Cycloheptandiol, 1,4-Cycloheptandiol, 2-Methyl-1,4-cycloheptandiol, 4-Methyl-1,3-cycloheptandiol, 4,4'-(1-Methylethyliden)-biscyclohexanol, 1,3-Cyclooctandiol, 1,4-Cyclooctandiol, 1,5-Cyclooctandiol, 5-Methyl-1,4-cyclooctandiol, 5-Ethyl-1,4-cyclooctandiol, 5-Propyl-1,4-cyclooctandiol, 5-Butyl-1,4-cyclooctandiol. Es können auch Gemische der oben genannten Alkohole eingesetzt werden. Vorzugsweise werden aliphatische, araliphatische oder cycloaliphatische Alkohole mit Molekulargewichten von ≤ 210 g/mol, mehr bevorzugt bevorzugte ≤ 150 g/mol, besonders bevorzugt ≤ 120 g/mol eingesetzt. Besonders bevorzugt werden mit Gewichtsanteilen von ≥ 80%, bezogen auf den Polyolanteil, lineare Polyole mit endständigen OH-Gruppen eingesetzt.

In einer besonderen Ausführungsform wird mit Blick auf die Isocyanatgruppe bis zu 20 mol% Wasser bevorzugt bis zu 10 mol% Wasser und besonders bevorzugt bis zu 5 mol% Wasser eingesetzt, wobei die Funktionalität von Wasser 2 beträgt. In diesem Fall werden neben Polyurethanen in geringeren Mengen auch Polyharnstoffe im Polymerisationsprozess unter Abspaltung von Kohlenstoffdioxid erzeugt.

In einer besonderen Ausführungsform wird mit Blick auf die Isocyanatgruppe bis zu 20 mol% Ammoniak bevorzugt bis zu 10 mol% Ammoniak und besonders bevorzugt bis zu 5 mol% Ammoniak eingesetzt, wobei die Funktionalität von Ammoniak mit 2 gerechnet wird. In diesem Fall werden neben Polyurethanen in geringeren Mengen auch Polybiurete im Polymerisationsprozess erzeugt.

Für das erste Polyurethanpolymer sind die Komponenten 1,6-Diisocyanatohexan, 1,5-Diisocyanatopentan und /oder 1,4-Diisocyanatobutan mit 1,3-Propandiol, 1,4-Butandiol, 1,5-Petandiol und/oder 1,6 Hexandiol bevorzugt.

Es ist möglich, dass die gegenüber Isocyanaten reaktive Komponente als Zusatzstoffe in geringen Mengen auch übliche gegenüber Isocyanaten reaktive mono-, tri- oder höherfunktionelle Verbindungen in Anteilen von ≤ 2 Gewichtsprozent, bevorzugt ≤ 1 Gewichtsprozent und besonders bevorzugt ≤ 0,5 Gewichtsprozent bezogen auf das Gesamtgewicht der gegenüber Isocyanaten reaktiven Komponente, z. B. als Kettenabbrecher, Hilfsmittel oder Entformungshilfen, enthält. Beispielhaft genannt seien Alkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol und Stearylalkohol. Beispiele geeigneter Triole sind Trimethylolethan, Trimethylolpropan oder Glycerin. Geeignete höherfunktionelle Alkohole sind Ditrimethylolpropan, Pentaerythrit, Dipentaerythrit oder Sorbit. Amine wie Butylamin und Stearylamin oder Thiole.

Es ist weiterhin möglich, dass die gegenüber Polyolen reaktive Komponente als Zusatzstoffe in geringen Mengen auch mono-, tri- oder höherfunktionelle Isocyanate in Anteilen von ≤ 2 Gewichts-%, bezogen auf das Gesamtgewicht der gegenüber Polyolen reaktiven Komponente enthält, zum Beispiel als Kettenabbrecher, Hilfsmittel oder Entformungshilfen.

In geringeren Mengen (beispielsweise ≤ 10 Gewichts-%, bevorzugt ≤ 5 Gewichts-%, bezogen auf das Gesamtgewicht der gegenüber Isocyanaten reaktiven Komponente) können auch Polyesterpolyole, Polyetherpolyole, Polycarbonatpolyole, Polyamidpolyole oder analoge aminterminierte Verbindungen als Polyolkomponenten eingesetzt werden, um bestimmte Effekte wie Zähigkeit und Kristallisationsgeschwindigkeit gewünscht zu beeinflussen.

Es ist weiterhin möglich, dass weitere gegenüber Isocyanaten reaktive Komponente als Zusatzstoffe in geringen Mengen wie zum Beispiel Amine, Thiole, Epoxide, Säuren, Säureanhydride, als auch mono-, di-, tri- oder höherfunktionelle Materialien in Anteilen von beispielsweise ≤ 10 Gewichts-%, bevorzugt ≤ 5 Gewichts-%, besonders bevorzugt ≤ 2 Gewichts-%, bezogen auf das Gesamtgewicht der gegenüber der Formulierung enthalten.

Zur Herstellung der thermoplastischen Polyurethane für den erfindungsgemäßen Einsatz in additiven Fertigungsverfahren können die Isocyanat-Komponente und die gegenüber Isocyanaten reaktive Komponente im gegebenenfalls in Gegenwart von einem oder mehreren Katalysatoren, Hilfs- und/oder Zusatzstoffen umgesetzt werden.

Geeignete Katalysatoren sind die nach dem Stand der Technik bekannten und üblichen tertiären Amine, wie z. B. Triethylamin, Dimethylcyclohexylamin, N-Methylmorpholin, N,N'-Dimethyl-piperazin, 2-(Dimethylaminoethoxy)-ethanol, Diazabicyclo-(2,2,2)-octan und ähnliche sowie insbesondere organische Metallverbindungen wie Titansäureester, Eisenverbindungen, Zinnverbindungen, z. B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- und/oder Zinnverbindungen.

Im Allgemeinen wird der Katalysator in Mengen von 0 bis 2,0 Gew.-%, bevorzugt von 0,005 bis 1,0 Gew.-% besonders bevorzugt von 0,01 bis 0,1 Gew.-% bezogen auf die Isocyanatkomponente eingesetzt. Der Katalysator kann in Substanz eingesetzt werden oder zum Beispiel gelöst in der gegenüber Isocyanaten reaktiven Komponente oder in einer besonderen Ausführungsform gelöst in der Isocyanat-Komponente. Ein Vorteil ist hierbei, dass die dann erhaltenen thermoplastischen Polyurethane keine Verunreinigungen durch ggf. mitverwendete Katalysatorlösungsmittel enthalten. Die Zugabe des Katalysators kann dabei in einer oder mehreren Portionen oder auch kontinuierlich, z. B. mit Hilfe einer geeigneten Dosierpumpe, über die gesamte Dauer der Umsetzung erfolgen.

Alternativ können aber auch Mischungen des bzw. der Katalysatoren mit einem Katalysatorlösungsmittel, bevorzugt mit einem organischen Katalysatorlösungsmittel, eingesetzt werden. Der Verdünnungsgrad der Katalysatorlösungen kann dabei innerhalb eines sehr breiten Bereichs frei gewählt werden. Katalytisch wirksam sind Lösungen ab einer Konzentration von 0,01 Gew.-%.

Geeignete Katalysatorlösungsmittel sind beispielsweise gegenüber Isocyanatgruppen inerte Lösungsmittel wie z.B. Hexan, Toluol, Xylol, Chlorbenzol, Essigsäureethylester, Essigsäurebutylester, Diethylenglykoldimethylether, DMSO, Dipropylenglykoldimethylether, Ethylenglykolmonomethyl- oder -ethyletheracetat, Diethylenglykolethyl- und -butyletheracetat, Propylenglykolmonomethyl-etheracetat, 1-Methoxypropyl-2-acetat, 3- Methoxy-n-butylacetat, Pro¬pylenglykoldiacetat, Aceton, Methylethylketon, Methylisobutylketon, Cyclohexanon, Lactone, wie β-Propiolacton, γ-Butyrolacton, ε-Caprolacton und ε -Methylcaprolacton, aber auch Lö-sungsmittel wie N-Methylpyrrolidon und N-Methylcaprolactam, 1,2-Propylencarbonat, Methylenchlorid, Dimethylsulfoxid, Triethylphosphat oder beliebige Gemische derartiger Lösungsmittel.

Es können aber auch Katalysatorlösungsmittel zum Einsatz kommen, die gegenüber Isocyanaten reaktive Gruppen tragen und in das Polyisocyanat eingebaut werden können. Beispiele für solche Lösungsmittel sind zum Beispiel Wasser, ein- oder mehrwertige einfache Alkohole, wie z. B. Methanol, Ethanol, n-Propanol, Isopropanol, n-Butanol, n-Hexanol, 2-Ethyl-1-hexanol, Ethylenglykol, Propylenglykol, die isomeren Butandiole, 2-Ethyl-1,3-hexandiol oder Glycerin; Etheralkohole, wie z. B. 1-Methoxy-2-propanol, 3-Ethyl-3-hydroxymethyloxetan, Tetrahydrofurfurylalkohol, Ethylengylkol-monomethylether, Ethylenglykolmonoethylether, Ethylenglykolmonobutylether, Diethylenglykolmonomethylether, Diethylenglykolmonothylether, Diethylenglykolmonobutylether, Diethylenglykol, Dipropylenglykol oder auch flüssige höhermolekulare Polyethylenglykole, Polypropylenglykole, gemischte Polyethylen/polypropylenglykole sowie deren Monoalkylether; Esteralkohole, wie z. B. Ethylenglykolmonoacetat, Propylen-glykolmonolaurat, Glycerinmono- und diacetat, Glyce-rinmonobutyrat oder 2,2,4-Trimethyl-1,3-pentandiol-monoisobutyrat; ungesättigte Alkohole wie z. B. Allylalkohol, 1,1-Dimethyl-allylalkohol oder Oleinalkohol; araliphatische Alkohole wie z. B. Benzylalkohol; N-monosubstituierte Amide, wie z. B. N-Methylformamid, N-Methylacetamid, Cyanacetamid oder 2-Pyrrolidinon oder beliebige Gemische derartiger Lösungsmittel.

Weiterhin können auch Hilfsmittel und/oder Zusatzstoffe eingesetzt werden. Dabei kann es sich beispielsweise um im Bereich der Thermoplasttechnologie gängige Zusatzstoffe wie Farbstoffe, Füllstoffe, faserige Füllstoffe, Verarbeitungshilfsmittel, Weichmacher, Wasser, Nukleierungsmittel, Stabilisatoren, Flammschutzmittel, Entformungsmittel oder verstärkende Additive handeln. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R. Gächter u. H. Müller (Hanser Verlag München 1990) oder der DE-A 29 01 774 zu entnehmen. Selbstverständlich kann es ebenfalls von Vorteil sein, mehrere Zusatzstoffe mehrerer Typen zu verwenden.

Die Herstellung des ersten Polyurethanpolymers kann auch über ein Prepolymer erfolgen. Bevorzugt für die Herstellung eines OH-terminierte Prepolymers sind die folgenden Kombinationen: 1,4-Diisocyanatobutan mit 1,2-Ethandiol, 1,4-Diisocyanatobutan mit 1,2- und/oder 1,3-Propandiol, 1,4-Diisocyanatobutan mit 1,2-, 1,3- und/oder 1,4-Butandiol, 1,4-Diisocyanatobutan mit 1,5-Pentandiol, 1,4-Diisocyanatobutan mit 1,6-Hexandiol, 1,4-Diisocyanatobutan mit 1,7-Heptandiol, 1,4-Diisocyanatobutan mit 1,8-Octandiol, 1,4-Diisocyanatobutan mit 1,9-Nonandiol, 1,4-Diisocyanatobutan mit 1,10-Decandiol, 1,4-Diisocyanatobutan mit 1,3-Cyclobutandiol, 1,4-Diisocyanatobutan mit 1,3-Cyclopentandiol, 1,4-Diisocyanatobutan mit 1,2-, 1,3- und 1,4-Cyclohexandiol und/oder Mischungen aus mindestens 2 Isomeren, 1,4-Diisocyanatobutan mit 1,4-Cyclohexandimethanol;

1,5-Diisocyanatopentan mit 1,2-Ethandiol, 1,5-Diisocyanatopentan mit 1,2- und/oder 1,3-Propandiol, 1,5-Diisocyanatopentan mit 1,2-, 1,3- und/oder 1,4-Butandiol, 1,5-Diisocyanatopentan mit 1,5-Pentandiol, 1,5-Diisocyanatopentan mit 1,6-Hexandiol, 1,5-Diisocyanatopentan mit 1,7-Heptandiol, 1,5-Diisocyanatopentan mit 1,8-Octandiol, 1,5-Diisocyanatopentan mit 1,3-Cyclobutandiol, 1,5-Diisocyanatopentan mit 1,3-Cyclopentandiol, 1,5-Diisocyanatopentan mit 1,2-, 1,3- und 1,4-Cyclohexandiol und/oder Mischungen aus mindestens 2 Isomeren, 1,5-Diisocyanatopentan mit 1,4-Cyclohexandimethanol,

1,6-Diisocyanatohexan mit 1,2-Ethandiol, 1,6-Diisocyanatohexan mit 1,2- und/oder 1,3-Propandiol, 1,6-Diisocyanatohexan mit 1,2-, 1,3- und/oder 1,4-Butandiol, 1,6-Diisocyanatohexan mit 1,5-Pentandiol, 1,6-Diisocyanatohexan mit 1,6-Hexandiol, 1,6-Diisocyanatohexan mit 1,7-Heptandiol, 1-Isocyanato-3,3,5-trimethyl-5-isocyanatomethyl-cyclohexan mit 1,2-Ethandiol und 1-Isocyanato-3,3,5-trimethyl-5-isocyanatomethyl-cyclohexan mit 1,2- und/oder 1,3-Propandiol.

Es ist weiterhin möglich, dass das Aufbaumaterial neben dem ersten Polyurethanpolymer noch weitere Polyurethanpolymere umfasst.

In einer bevorzugten Ausführungsform weist das erste Polyurethanpolymer einen Anteil an Hartsegmenten, ausgedrückt als Gewichtsverhältnis der Summe von aus Zerewitinoff-aktiven Verbindungen mit drei oder weniger Wiederholungseinheiten im Molekül stammenden Bestandteilen und der mit ihnen verbundenen Isocyanatbausteine zum Gesamtgewicht des Polyurethanpolymers, von ≥ 80 Gewichts-% bis ≤ 100 Gewichts-% auf. Bevorzugt ist ein Anteil von ≥ 90 Gewichts-% bis ≤ 99 Gewichts-%. Als typische Wiederholungseinheiten sollen hier zum Beispiel die Wiederholungseinheiten in Amino- oder OH-terminierten Polyethern, Polyestern und Polycarbonaten gelten.

In einer weiteren bevorzugten Ausführungsform weist das erste Polyurethanpolymer einen Anteil von aus Isocyanaten stammenden Verbindungen von ≥ 50 Gewichts-% auf. Vorzugsweise beträgt dieser Anteil ≥ 55 Gewichts-%, mehr bevorzugt ≥ 60 Gewichts-%. Der Gewichtsanteil der NCO-Komponente lässt sich in einfacher Weise aus der für die Herstellung des Polyurethans eingesetzten Reaktionsmischung berechnen.

In einer weiteren bevorzugten Ausführungsform wurde das erste Polyurethanpolymer aus der Reaktion einer Isocyanatkomponente mit ≥ 80 Gewichts-% aliphatischen Isocyanaten und einer gegenüber Isocyanaten reaktiven Komponente erhalten. Bevorzugt sind ≥ 90 Gewichts-% aliphatischen Isocyanate, mehr bevorzugt ≥ 95 Gewichts-% aliphatische Isocyanaten. In einer weiter bevorzugten Aufführungsform werden geringe Mengen aromatischer Diisocyanate zugesetzt, beispielsweise in Anteilen bis zu 2 Gewichts-%, bezogen auf das Gesamtgewicht der Isocyanatkomponente. Beispiele für geeignete aromatische Diisocyanate sind 2,4- und 2,6-Diisocyanatotoluol (TDI), 2,4'- und 4,4'-Diisocyanatodiphenylmethan (MDI) und 1,5-Diisocyanatonaphthalin und O-tolidine Diisocyanate (TODI).

In einer weiteren bevorzugten Ausführungsform wurde das erste Polyurethanpolymer aus der Reaktion einer Isocyanatkomponente mit ≥ 80 Gewichts-% linearen aliphatischen Isocyanaten und einer gegenüber Isocyanaten reaktiven Komponente mit ≥ 80 Gewichts-% linearen aliphatischen Polyolen erhalten. Besonders bevorzugt ist als erstes Polyurethanpolymer ein Polyurethanpolymer, welches aus einer Isocyanatkomponente mit ≥ 90 Gewichts-% 1,6-Hexamethylendiisocyanat oder Pentamethylendiisocyanat und einer gegenüber Isocyanaten reaktiven Komponente mit ≥ 90 Gewichts-% 1,4-Butandiol oder 1,3 Propandiol oder 1,5 Pentandiol oder 1,6 Hexandiol erhalten wurde.

In einer weiteren bevorzugten Ausführungsform des Verfahresns wurde das Polyurethanpolymer aus der Reaktion einer linearen Diisocyanatkomponente mit ≥ 80 Gewichts-% bevorzugt, ≥ 90 Gewichts-% und besonders bevorzugt ≥ 95 Gewichts.-% des einen linearen aliphatischen Isocyanats und einer linearen Diolkomponente mit ≥ 80 Gewichts-%, bevorzugt ≥ 90 Gewichts-% und besonders bevorzugt ≥ 95 Gewichts.-% des einen linearen aliphatischen Polyols erhalten. Besonders bevorzugt ist das eine lineare Diisocyanat1,6-Hexamethylendiisocyanat oder 1,5-Pentandiisocyanat und das eine lineare Diol 1,3 Propandiol oder 1,4 Butandiol, oder 1,5 Pentandiol oder 1,6 Hexandiol. Besonders bevorzugt aber 1,4 Butandiol oder 1,6 Butandiol.

In einer weiteren besonders bevorzugten Ausführungsform ist die Summe aus der Zahl der C Atome der überwiegenden aliphatischen Diisocyanatkomponente und der Zahl der C Atome der überwiegenden aliphatischen Diolkomponente geteilt durch 2 eine reale Zahl. Es hat sich gezeigt, dass die Kombination von geradzahligen (bezüglich der C-Atome) Isocyanaten und Diolen zu besonders gut kristallisierenden und vorteilhaften Bausteinen für den Einsatz im 3D-Druck führt.

In einer weiteren bevorzugten Ausführungsform weist das Aufbaumaterial einen mittels dynamischer Differenzkalorimetrie (differential scanning calorimetry, DSC; 2. Aufheizung mit Aufheizrate 20 K/min) bestimmten Schmelzpunkt von ≥ 120 °C bis ≤ 189 °C auf und die Halbwertsbreite des Schmelzpunktpeaks dynamische Differenzkalorimetrie DSC; 2te Aufheizung mit Aufheizrate 5 K/min des Aufbaumaterials beträgt ≥ 5 K bis ≤ 20 K. Bevorzugt liegt der Schmelzpunkt bei ≥ 140 °C bis ≤ 187 °C und die Halbwertsbreite des Schmelzpunktpeaks beträgt ≥ 5 K bis ≤ 17 K Ganz besonders bevorzugt liegt der Schmelzpunkt bei ≥ 150 °C bis ≤ 185 °C und die Halbwertsbreite des Schmelzpunktpeaks beträgt ≥ 5 K bis ≤ 15 K.

In einer weiteren bevorzugten Ausführungsform weist das Aufbaumaterial einen mittels dynamischer Differenzkalorimetrie (DSC; 2. Aufheizung mit Aufheizrate 20 K/min) bestimmten Glaspunkt von ≥ 0 °C bis ≤ 50 °C auf.

In einer weiteren bevorzugten Ausführungsform weist das Aufbaumaterial nach 1000 Stunden SAE J 1960 CAM 180-Bewitterung (s. auch: Farbe & Lack, Ausgabe 09/2007, Seite: 46 Kürzer in der Klimakammer) eine Farbzahl-Zunahme von ≤ 50, bevorzugt ≤ 30, besonders bevorzugt ≤ 20 und ganz besonders bevorzugt ≤ 10 im b-Wert auf.

In einer weiteren bevorzugten Ausführungsform beträgt die komplexe Viskosität des geschmolzenen Aufbaumaterials, bestimmt durch ein Platte/Platte-Rheometer gemäß ISO 6721-10:2015-09 bei 1/s und 0,1% Deformation und 200 °C, nach jeweils 1 Minute gemessen, noch ≥ 50%, der komplexen Viskosität des geschmolzenen Aufbaumaterials gemessen bei 190 °C. In einer besonders bevorzugten Ausführungsform beträgt die komplexe Viskosität des geschmolzenen Aufbaumaterials gemessen bei 240 °C dagegen nur noch ≤ 15% bevorzugt ≤ 10% und ganz besonders bevorzugt ≤ 5% der komplexen Viskosität des geschmolzenen Aufbaumaterials gemessen bei 190 °C. Der für hochmolekulare Polymere in der Schmelze typische langsame Abfall der Schmelzeviskosität oberhalb der Schmelzetemperatur kombiniert mit dem außergewöhnlich hohen Abfall der Schmelzeviskosität des erfindungsgemäßen Aufbaumaterials bei Temperaturen oberhalb von ≫ 200 °C ist besonders vorteilhaft für die Eigenschaftsgestaltung von Bauteilen bei 3D Druckprozessen im SLS und FDM Prozess, wo kurzfristig hohe Temperaturen erreicht werden können, wo die zu verarbeitenden Polymere typischerweise thermisch abbauen und die Materialien gut fließen sollen, weil über eine einfache Temperaturerhöhung die Schmelzeeigenschaften und Fließeigenschaften des erfindungsgemäßen Polymeren in einem weiten Bereich präzise gesteuert werden können und somit gezielt Materialverläufe und Porositäten gestaltet werden können.

So können besonders vorteilhaft eine hohe Fließfähigkeit bei nur kurz, bevorzugt ≤ 60 Sekunden, besonders bevorzugt ≤ 30 Sekunden wirkenden hohen Temperaturen, wie zum Beispiel beim SLS Verfahren während der Einwirkung des Laser oder im FDM Prozess während der Erhitzung im Heizblock vor der Düse mit einem schnellen Viskositätsaufbau bei niedrigeren Temperatur knapp oberhalb des Schmelzpunktes kombiniert werden. Bevorzugt ist der Viskositätssprung von 190 °C zu 240°C reversibel, das heißt es werden nach Einwirkungszeit von 240 °C von max. 1 Minute ≥ 50%, bevorzugt ≥ 60% und weiter bevorzugt ≥ 70% der Ausgangsviskosität gemäß ISO 6721-10:2015-09 bei 1/s und 0,1% Deformation nach 1 Minute bei 190°C wieder erreicht.

In einer weiteren bevorzugten Ausführungsform erreicht die komplexe Viskosität des geschmolzenen Aufbaumaterials bei 240 °C nach Abkühlung auf 190 °C nach 1 Minute wieder ≥ 50% der Ausgangsviskosität gemäß ISO 6721-10:2015-09 bei 1/s und 0,1% Deformation bei 190 °C.

In einer weiteren bevorzugten Ausführungsform umfasst die Herstellung des Gegenstands mittels des additiven Fertigungsverfahrens die Schritte:
- Auftragen einer Schicht aus, das Aufbaumaterial aufweisenden, Partikeln auf eine Zielfläche;
- Einwirken von Energie auf einen ausgewählten Teil der Schicht, entsprechend einem Querschnitt des Gegenstands, so dass die Partikel im ausgewählten Teil verbunden werden;
- Wiederholen der Schritte des Auftragens und des Einwirkens von Energie für eine Mehrzahl von Schichten, so dass die verbundenen Teile der benachbarten Schichten sich verbinden, um den Gegenstand zu bilden.

Gemäß dieser Ausführungsform handelt es sich um ein Pulversinter- oder Pulverschmelzverfahren. Ist die Anzahl der Wiederholungen für Auftragen und Bestrahlen hinreichend gering, kann auch von einem zweidimensionalen Gegenstand gesprochen werden, der aufgebaut werden soll. Solch ein zweidimensionaler Gegenstand lässt sich auch als Beschichtung charakterisieren. Beispielsweise können zu dessen Aufbau ≥ 2 bis ≤ 20 Wiederholungen für Auftragen und Bestrahlen durchgeführt werden. Dieses ist für Lackierverfahren auf Basis von Pulversintern besonders vorteilhaft.

Es ist bevorzugt, dass mindestens 90 Gewichts-% der Partikel einen Teilchendurchmesser von ≤ 0,5 mm, bevorzugt ≤ 0,3 mm, besonders bevorzugt ≤ 0,15 mm aufweisen. Die Energiequelle zum Verbinden der Teilchen kann elektromagnetische Energie wie zum Beispiel UV- bis IR-Licht sein. Denkbar ist auch ein Elektronenstrahl. Das Verbinden der Partikel im bestrahlten Teil der Partikelschicht erfolgt üblicherweise durch (teilweises) Aufschmelzen eines (teil)kristallinen Materials und Verbinden des Materials beim Abkühlen.

In einer weiteren bevorzugten Ausführungsform umfasst das Einwirken von Energie auf einen ausgewählten Teil der Schicht, entsprechend einem Querschnitt des Gegenstandes, so dass die Partikel im ausgewählten Teil verbunden werden, den folgenden Schritt:
Aufdrucken eines Strahlungsenergie absorbierenden und/oder Strahlungsenergie reflektierenden Materials auf einen ausgewählten Teil der Schicht und Einwirken von Energie auf die Schicht wobei der ausgewählte Teil der Schicht bevorzugt eine höhere oder niedrigere Absorption der Energie aufweist, so dass die Partikel im ausgewählten Teil oder den ausgewählten Teil umgebend entsprechend einem Querschnitt des Gegenstandes verbunden werden;
Diese Verfahrensform kann als selektives Sinterverfahren, insbesondere als selektives Lasersinterverfahren (SLS) oder als Multi Jet Fusion Lasersinterverfahren angesehen werden. Der Energiestrahl zum Verbinden der Teilchen kann ein Strahl elektromagnetischer Energie wie zum Beispiel ein "Lichtstrahl" von UV- bis IR-Licht sein. Vorzugsweise ist der Energiestrahl ein Laserstrahl, besonders bevorzugt mit einer Wellenlänge zwischen 600 nm und 15 µm. Der Laser kann als Halbleiterlaser oder als Gaslaser ausgeführt sein. Denkbar ist auch ein Elektronenstrahl. Vorzugsweise erfolgt das Einwirken von Energie mittels eines IR-Lasers, so dass auch das erfindungsgemäß vorgesehene zumindest Zeitweise Aussetzen des Aufbaumaterials mit InfrarotStrahlung im Wellenlängenbereich zwischen 600 nm und 1700 nm hierdurch verwirklicht wird. Gegebenenfalls kann im Multi Jet Fusion Verfahren auch die gesamte Fläche zum Beispiel mit IR Strahlung belichtet werden und nur ausgewählte Bereiche versintern.

In einer weiteren bevorzugten Ausführungsform umfasst die Herstellung des Gegenstands mittels des additiven Fertigungsverfahrens die Schritte:
- Auftragen eines Filaments eines zumindest teilweise geschmolzenen Aufbaumaterials auf einen Träger, so dass eine Lage des Aufbaumaterials erhalten wird, welche einem ersten ausgewählten Querschnitt des Gegenstands entspricht;
- Optional Auftragen eines Filaments des zumindest teilweise geschmolzenen Aufbaumaterials auf eine zuvor aufgetragene Lage des Aufbaumaterials, so dass eine weitere Lage des Aufbaumaterials erhalten wird, welche einem weiteren ausgewählten Querschnitt des Gegenstands entspricht und welche mit der zuvor aufgetragenen Lage verbunden ist;
- Optional Wiederholen des Schritts des Auftragens eines Filaments des zumindest teilweise geschmolzenen Aufbaumaterials auf eine zuvor aufgetragene Lage des Aufbaumaterials, bis der Gegenstand gebildet ist.

Bei dieser Ausführungsform handelt es sich um ein Schmelzschichtungs- oder Fused Deposition Modeling (FDM)-Verfahren. Ist die Anzahl der Wiederholungen für das Auftragen hinreichend gering, kann auch von einem zweidimensionalen Gegenstand gesprochen werden, der aufgebaut werden soll. Solch ein zweidimensionaler Gegenstand lässt sich auch als Beschichtung charakterisieren. Beispielsweise können zu dessen Aufbau ≥ 1 bis ≤ 20 Wiederholungen für das Auftragen durchgeführt werden.

Die einzelnen Filamente, welche aufgetragen werden, können einen Durchmesser von ≥ 30 µm bis ≤ 5000 µm aufweisen, bevorzugt ≥ 40 µm bis ≤ 2000 µm und besonders bevorzugt ≥ 50 µm bis ≤ 1000 µm.

Der erste Schritt dieser Ausführungsform des Verfahrens betrifft den Aufbau der ersten Lage auf einen Träger. Anschließend wird der zweite Schritt so lange ausgeführt, in dem auf zuvor aufgetragene lagen des Aufbaumaterials weiter Lagen aufgetragen werden, bis das gewünschte Endergebnis in Form des Gegenstands erhalten wird. Das zumindest teilweise aufgeschmolzene Aufbaumaterial verbindet sich mit bereits bestehenden Lagen des Materials, um eine Struktur in z-Richtung aufzubauen. Es ist aber möglich, dass nur eine Lage des Aufbaumaterials auf einen Träger aufgetragen wird.

In einer weiteren bevorzugten Ausführungsform wird das Verfahren innerhalb eines Bauraums durchgeführt und die Temperatur des Bauraums ist ≥ 5 °C, bevorzugt ≥ 10 °C und ganz besonders bevorzugt ≥ 15°C geringer als die Schmelztemperatur Tₘ des Aufbaumaterials (bestimmt durch dynamische Differenzkalorimetrie, DSC, gemäß DIN EN ISO 11357-1:2017-02 bei einer Heizrate von 20 °C/min) und bevorzugt ≥ 5°C, besonders bevorzugt ≥ 20 °C und ganz besonders bevorzugt ≥ 50 °C größer als der Tg des Aufbaumaterials, (bestimmt durch dynamische Differenzkalorimetrie, DSC, gemäß DIN EN ISO 11357-1:2017-02 bei einer Heizrate von 20 °C/min). Damit ist besonders bei komplexen und großen Bauteilen mit langer Fertigungszeit eine deutlich geringere thermische Belastung und bessere Maßhaltigkeit des Bauteils verbunden. In Pulversinterverfahren können die Pulver bei deutlich geringerer Bauraumtemperatur verarbeitet werden. Somit kann ein ungewolltes Versintern von Pulver unterhalb der (aktivierten) Oberfläche vermieden werden.

Ein weiterer Aspekt der Erfindung ist ein Gegenstand, erhältlich durch ein erfindungsgemäßes Verfahren, wobei der Gegenstand aus einem Aufbaumaterial hergestellt ist, welches ein erstes Polyurethanpolymer umfasst, welches ein mittels Elementaranalyse bestimmtes Gewichtsprozent-Verhältnis von O zu N von ≥ 2 bis ≤ 2,5, ein mittels Elementaranalyse bestimmtes Gewichtsverhältnis N zu C von ≥ 0,1 bis ≤ 0,25, eine mittels dynamischer Differenzkalorimetrie (differential scanning calorimetry, DSC; 2. Aufheizung mit Aufheizrate 5 K/min) bestimmte Halbwertsbreite des Schmelzpeaks von ≤ 20 K und eine mittels dynamischer Differenzkalorimetrie, DSC; 2te Aufheizung) bei einer Aufheiz- und Abkühlrate von 20 K/min bestimmte Differenz aus der Schmelztemperatur und der Rekristallisationstemperatur von ≥ 5 K und ≤ 100 K aufweist und wobei der Gegenstand in Aufbaurichtung des in seiner Herstellung eingesetzten additiven Herstellungsverfahrens eine Zugfestigkeit (ISO 527:2012) aufweist, welche ≥ 20% bis ≤ 100% der Zugfestigkeit (ISO 527:2012) eines spritzgegossenen Probenkörpers aus dem gleichen Aufbaumaterial beträgt. Diese Zugfestigkeiten im additiv gefertigten Gegenstand betreffen somit die Haftung einzelner Lagen des Aufbaumaterials zueinander.

In einer bevorzugten Ausführungsform des Gegenstands weist das erste Polyurethanpolymer einen Anteil an Hartsegmenten, ausgedrückt als Gewichtsverhältnis der Summe von aus Zerewitinoff-aktiven Verbindungen mit drei oder weniger Wiederholungseinheiten im Molekül stammenden Bestandteilen und der mit ihnen verbundenen Isocyanatbausteine zum Gesamtgewicht des Polyurethanpolymers, von ≥ 80 Gewichts-% bis ≤ 100 Gewichts-% auf. Bevorzugt ist ein Anteil von ≥ 90 Gewichts-% bis ≤ 99 Gewichts-%.

In einer weiteren bevorzugten Ausführungsform des Gegenstands weist das erste Polyurethanpolymer einen Anteil von aus Isocyanaten stammenden Verbindungen von ≥ 50 Gewichts-% auf. Vorzugsweise beträgt dieser Anteil ≥ 55 Gewichts-%, mehr bevorzugt ≥ 60 Gewichts-%. Der Gewichtsanteil der NCO-Komponente lässt sich in einfacher Weise aus der für die Herstellung des Polyurethans eingesetzten Reaktionsmischung berechnen.

In einer weiteren bevorzugten Ausführungsform des Gegenstands wurde das erste Polyurethanpolymer aus der Reaktion einer Isocyanatkomponente mit ≥ 80 Gewichts-% aliphatischen Isocyanaten und einer gegenüber Isocyanaten reaktiven Komponente erhalten. Bevorzugt sind ≥ 90 Gewichts-% aliphatischen Isocyanate, mehr bevorzugt ≥ 95 Gewichts-% aliphatische Isocyanaten. In einer weiter bevorzugten Aufführungsform werden geringe Mengen aromatischer Diisocyanate zugesetzt, beispielsweise in Anteilen bis zu 2 Gewichts-%, bezogen auf das Gesamtgewicht der Isocyanatkomponente. Beispiele für geeignete aromatische Diisocyanate sind 2,4- und 2,6-Diisocyanatotoluol (TDI), 2,4'- und 4,4'-Diisocyanatodiphenylmethan (MDI) und 1,5-Diisocyanatonaphthalin und o-Tolidindiisocyanat (TODI).

In einer weiteren bevorzugten Ausführungsform des Gegenstands wurde das erste Polyurethanpolymer aus der Reaktion einer Isocyanatkomponente mit ≥ 80 Gewichts-% linearen aliphatischen Isocyanaten und einer gegenüber Isocyanaten reaktiven Komponente mit ≥ 80 Gewichts-% linearen aliphatischen Polyolen erhalten. Besonders bevorzugt ist als erstes Polyurethanpolymer ein Polyurethanpolymer, welches aus einer Isocyanatkomponente mit ≥ 90 Gewichts-% 1,6-Hexamethylendiisocyanat und einer gegenüber Isocyanaten reaktiven Komponente mit ≥ 90 Gewichts-% 1,4-Butandiol erhalten wurde.

Zur Vermeidung von Wiederholungen wird bezüglich des ersten Polyurethanpolymers, auch hinsichtlich weiterer bevorzugter Ausführungsformen, auf die Ausführungen zum erfindungsgemäßen Verfahren verwiesen.

### Beispiele

Die vorliegende Erfindung wird anhand der nachfolgenden Figuren und Beispiele näher erläutert.
Figur 1 zeigt einen Aufbau zur Durchführung der zweistufigen kontinuierlichen Herstellung eines Prepolymers durch Reaktionsfolge in temperierten Polymerisationsreaktor und Extruder.
Figur 2 zeigt einen Aufbau zur Durchführung der zweistufigen kontinuierlichen Herstellung eines Prepolymers durch Reaktionsfolge in Schleifenreaktor und Extruder.
Figur 3 zeigt einen Aufbau zur Durchführung einer einstufigen kontinuierlichen Herstellung eines Prepolymers durch Rechationsfolge in einem Scheifenreaktor.

### Analysenmethoden:

### GPC-Methode zur Bestimmung von Mn und Mw:

Das Zahlenmittel und das Massenmittel der Molmasse wurden mit Hilfe einer Gelpermeationschromatographie (GPC) bestimmt. Dazu wurde die zu vermessende Probe in einer Lösung von 3 g Kaliumtrifluoracetat in 400 Kubikzentimeter Hexafluorisopropanol aufgelöst (Konzentration der Probe ca. 2 mg/Kubikzentimeter). Die jeweiligen GPCs wurden mit folgenden Komponenten bei einer Flussrate von 1 Kubikzentimeter/Minute gemessen:

| | |
|---|---|
| Pumpe: | HPLC-Pumpe 515 (Waters GmbH) |
| Detektor: | Smartline RI-Detektor 2300 (Knauer Wissenschaftliche Geräte GmbH) |
| Säulen: | 1 Vorsäule, 1000 Å PSS PFG 7µm, 300 Å PSS PFG 7µm, 100 Å PSS PFG 7µm in dieser Reihenfolge (PSS Polymer Standards Service GmbH) |
| Entgasung: | Degasser PSS (PSS Polymer Standards Service GmbH) |
| Injektionsvolumen: | 100 Mikroliter |
| Temperatur: | 23 °C - 25 °C |
| Molmassen-Standard: | Polymethylmethacrylat-Standard-Kit (PSS Polymer Standards Service GmbH) |

### Farbwerte

Die Farbwerte im CIE-Lab Farbraum wurden mit einem Konica Minolta CM5 Spektralphotometer, mit der Lichtart D 65, bei 10° Beobachter gemäß DIN EN ISO 11664-1 (Juli 2011) bestimmt.

### Differentialkaloremetrie (DSC)

Der Schmelzpunkt wurde mittels DSC (Differential Scanning Calorimetry) mit einem Mettler DSC 12E (Mettler Toledo GmbH, Gießen, DE) entsprechend DIN EN 61006 (November 2004) bestimmt. Eine Kalibrierung erfolgte durch die Temperatur des Schmelz-Onsets von Indium und Blei. Es wurden 10 mg Substanz in Normalkapseln eingewogen. Die Messung erfolgte durch drei Aufheizungen von -50 °C bis +200 °C bei einer Heizrate von 20 K/min mit anschließender Abkühlung mit einer Kühlrate von 20 K/min. Die Kühlung erfolgte durch flüssigen Stickstoff. Als Spülgas wurde Stickstoff verwendet. Die angegebenen Werte basieren jeweils auf der Auswertung der 2. Aufheizkurve.

### Screening Differenz-Thermoanalyse (DTA)

Die Enthalpiedaten wurden mittels einer Screening-DTA ermittelt in einem nach ISO 17025 akkreditierten Labor durchgeführt. Die Proben wurden in Glasampullen eingewogen, gasdicht versiegelt und im Messgerät mit 3 K/min von -50 bis +450 °C erwärmt. Mittels Thermoelementen wurde die Differenz zwischen der Probentemperatur und der Temperatur einer inerten Referenz (Aluminiumoxid) bestimmt. Die Einwaage lag bei 20 - 30 mg. Alle Messungen wurden nach DIN 51007 (Juni 1994) durchgeführt.

### Bestimmung der maximalen Biegespannung:

Die Biegespannung wurde an Probekörpern (Stäbe der Dimension 80 mm x10 mm x 4 mm) bestimmt, durch einen langsamen Dreipunkt-Biegeversuch bei Raumtemperatur nach DIN EN ISO 178 (September 2013), durchgeführt mit einer Universalprüfmaschine 5566 der Firma Instron mit einer Geschwindigkeit von 5 mm/Minute, einem Finnenradius von 5 mm und einer Auflagedistanz von 64 m.

### Bestimmung der maximalen Zugspannung:

Die Zugprüfung wurde an Probekörpern (Stäbe der Dimension 80 mm x10 mm x 4 mm) bestimmt. Langsamer Zugversuche bei Raumtemperatur, durchgeführt mit einer Universalprüfmaschine Z010 der Fa. Zwick mit einer Geschwindigkeit von 10 mm/min.

### Bestimmung der komplexen Viskosität:

Die komplexe Viskosität wurde mit einem ARES-G2 Oszillationsrheometer des Herstellers TA-Instruments nach ISO 6721-10:1999 gemessen. Dazu wurde die Probe zuvor mindestens 4 Tage im Vakuumschrank bei 40 °C getrocknet und anschließend bei 190 °C innerhalb von 30 s zu Platten von 25 mm bzw. 35 mm Durchmesser verpresst. Diese Proben wurden in den auf die Messtemperatur vorgeheizte Ofen des Rheometers platziert. Nachdem die Probe die Messtemperatur erreicht hat wurde die oszillierende Messung in Platte-Platte Geometrie unter Stickstoffatmosphäre gestartet. Bei der Messtemperatur wurden Speicher- und Verlustschubmodul im Bereich anfangend bei 100 Hz bis 0,01 Hz bestimmt.

### Elementaranalysen:

CONH-Analysen wurden bei der Currenta GmbH & Co. OHG in Leverkusen, DE durchgeführt.

### Isocyanat-Titration:

Durch Rücktitration von Butylamin mit 0,1 n Salzsäure nach Zugabe eines Aminüberschusses zu einer Isocyanatlösung unter Zuhilfenahme eines Metrohm, 751 GPD titrino 685 Dosimat und 728 Rührer.

### Druckversuche:

Druckversuche zur Prüfung der Eignung als 3D-Druck-Sintermaterialien erfolgten in einer Anlage vom Typ Farsoon F 251 P. Dabei wurden (wenn möglich) durch Lasersintern S2-Zugversuchsstäbe hergestellt. Je fünf Zugversuchsstäbe aus den jeweiligen Pulvern/Pulvermischungen wurden in einem Zugversuch in Anlehnung an DIN 53504 getestet. Die Mittelwerte der erhaltenen Ergebnisse sind in Tabelle 2 aufgeführt.

### Verwendete Rohstoffe:

1,6-Hexamethylendiisocyanat (HDI), 1,5-Pentamethylendiisocyanat (PDI), Isophorondiisocyanat (IPDI), 4,4'-Diisocyanatodicyclohexylmethan (H12MDI) und Xylylendiisocyanat (XDI) wurden von der Covestro AG bezogen.

1,4-Butandiol (BDO) wurde von der Firma Ashland bezogen. 1,3-Propandiol (PDO), 1,6-Hexandiol (HDO) und 1,4-Cyclohexandimethanol wurden von der Firma Sigma-Aldrich bezogen. Die Reinheit der Rohstoffe lag jeweils bei ≥ 99 % Gew.-%.
Poly-THF^{®} 100 bezogen von der Fa. BASF
Aceton in Analysenqualität, bezogen von der Firma Merck
Chlorbenzol in Analysenqualität, bezogen von der Firma Merck
Entionisiertes Wasser, bezogen von Firma Wittig-Umweltchemie.
Farsoon FS 3300PA (PA12-Pulver) bezogen von der Firma Farsoon.
Desmopan 3660 DU: Thermoplastisches Polyurethan, bezogen von der Firma Covestro.

### Beispiel 1: Herstellung eines erfindungsgemäß verwendbaren Polymers

In einem mit Stickstoff inertisierten 5 1 Druckkessel mit Ankerrührer, Bodenablass und Innenthermometer wurden 1,4-Butandiol (1,35 kg) unter Stickstoff (1 bar) vorgelegt und gerührt, bis eine Innentemperatur von 90 °C erreicht wurde. Über einen Zeitraum von 2 h wurde anschließend die Gesamtmenge an 1,6-Hexamethylendiisocyanat kontinuierlich in den Druckkessel dosiert (2,5 kg), während gleichzeitig die Reaktortemperatur kontinuierlich bis auf 190 °C erhöht wurde wobei bei der Zugabe darauf geachtet wurde, dass die Reaktortemperatur 200 °C nicht überschreitet. Nach Beendigung der Zugabe von 1,6-Hexamethylendiisocyanat wurde noch weitere 5 Minuten bei 190 °C gerührt und die Polymerschmelze über den Bodenablass mit auf ca. 150 °C vorgewärmten N₂ abgedrückt.

Der Schmelzpunkt (TM) des Polymers betrug 174,9 °C (DSC, 2. Aufheizung nach Abkühlung mit 20 K/min).

### Beispiel 2: Herstellung eines erfindungsgemäß verwendbaren Polymers

In einem mit Stickstoff inertisierten 5 1 Druckkessel mit Ankerrührer, Bodenablass und Innenthermometer wurden 1,4-Butandiol (0,3 kg) in 3 kg Chlorbenzol unter Stickstoff (1 bar) vorgelegt und gerührt, bis eine Innentemperatur von 120 °C erreicht wurde. Über einen Zeitraum von 2 h wurde anschließend die Gesamtmenge an 1,6-Hexamethylendiisocyanat kontinuierlich in den Druckkessel dosiert (0,556 kg), während gleichzeitig die Reaktortemperatur kontinuierlich bis auf 140 °C erhöht wurde, wobei bei der Zugabe darauf geachtet wurde, dass die Reaktortemperatur 160 °C nicht überschreitet. Nach Beendigung der Zugabe von 1,6-Hexamethylendiisocyanat wurde noch weitere 2 h bei 140 °C gerührt, das Polymere fiel dabei als weißes feines Feststoffpulver aus und wurde nach Abkühlen auf 23°C filtriert, mit Aceton und Wasser gewaschen und im Vakuumtrockenschrank bei Wasserstrahlpumpenvakuum für 12h bei 100 °C getrocknet.

Der Schmelzpunkt (TM) des hergestellten Polymers betrug 180,2 °C (DSC, 2. Aufheizung mit 20 K/min).

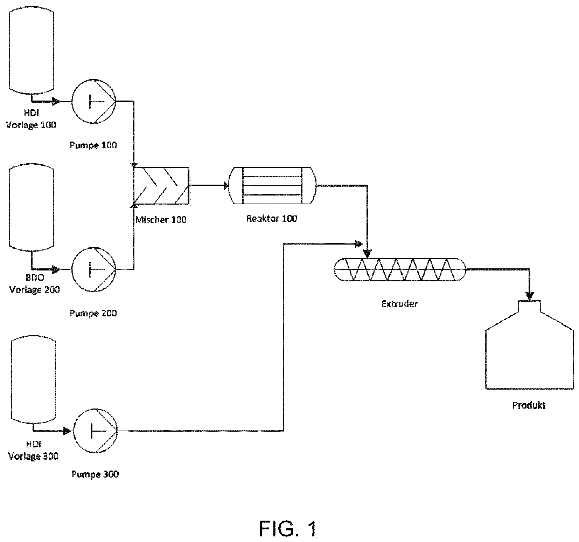

### Beispiel 3 (Figur 1): Herstellung eines erfindungsgemäß verwendbaren Polymers

Figur 1 zeigt schematisch den Aufbau zur Durchführung der zweistufigen kontinuierlichen Herstellung eines thermoplastischen Polyurethans mit hohem Hartsegmentanteil.

Aus Vorlage 1 wurden 311,7 g/h 1,6-Hexamethylendiisocyanat mit der Pumpe 100 (Typ: SyrDos2 mit 10 mL-Spritzen der Firma HiTec Zang) in den Mischer 100 gefördert. Zeitgleich wurden aus Vorlage 2 208,7 g/h 1,4-Butandiol mit der Pumpe 200 (Typ: SyrDos2 mit 10 mL-Spritzen der Firma HiTec Zang) ebenfalls in den Mischer 100 gefördert. Bei Raumtemperatur wurden beide Stoffströme in den Mischer 100 gemischt. Als Mischer wurde ein Kaskadenmischer der Firma Ehrfeld Microtechnik BTS GmbH verwendet. Die Mischung wurde anschließend in den bei 190 °C temperierten Reaktor 100 (Typ CSE-X/8G, Form G, Innendurchmesser = 12,3 mm, Länge = 500 mm der Firma Fluitec, Wärmeaustauschvermögen von 60 Kilowatt pro Kubikmeter und Kelvin) geleitet. Die Verweilzeit im Reaktor betrug 5 min. Das aus Reaktor 100 kontinuierlich austretende Prepolymer wurde durch eine auf 200 °C beheizte Rohrleitung in das zweite Gehäuse eines 2-Wellen Extruder (Miniextruder Process 11/Thermo Fisher) überführt. Der Extruder wurde über seine gesamte Länge auf 200 °C beheizt und die Drehzahl der Wellen betrug 100 U/min. Anschließend wurden in Gehäuse 3 des Extruders 70,1 g/h 1,6-Hexamethylendiisocyanat mit der Pumpe 300 (Typ: SyrDos2 mit 10 mL-Spritzen der Firma HiTec Zang) gefördert. Das entstandene milchig-weiße Produkt wurde durch die Extruderdüsen ausgetragen, als Strang abgezogen, im Wasserbad gekühlt und granuliert. Die mittlere Verweilzeit über alle Verfahrensstufen betrug ca. 6 Minuten.

Der Schmelzpunkt (TM) des hergestellten Polymers betrug 182,9 °C (DSC, 2. Aufheizung mit 20 K/min) und die Härte lag über 75 Shore D.

### Beispiel 4: Herstellung eines erfindungsgemäß verwendbaren Polymers

In einem Versuchsaufbau wie in Beispiel 3 beschrieben wurden 311,7 g/h 1,6-Hexamethylendiisocyanat mit der Pumpe 100, 273,7 g/h 1,6-Hexandiol mit der Pumpe 200, sowie 70,1 g/h 1,6-Hexamethylendiisocyanat mit der Pumpe 300 dosiert und zur Reaktion gebracht. Die mittlere Verweilzeit über alle Verfahrensstufen betrug ca. 6 Minuten.

Der Schmelzpunkt (TM) des hergestellten Polymers betrug 168,6 °C (DSC, 2. Aufheizung nach Abkühlung mit 20 K/min).

### Beispiel 5: Herstellung eines erfindungsgemäß verwendbaren Polymers

In einem Versuchsaufbau wie in Beispiel 3 beschrieben wurden 311,7 g/h 1,6-Hexamethylendiisocyanat mit der Pumpe 100, 240,2 g/h 1,5-Pentandiol mit der Pumpe 200, sowie 73,9 g/h 1,6-Hexamethylendiisocyanat mit der Pumpe 300 dosiert und zur Reaktion gebracht. Die mittlere Verweilzeit über alle Verfahrensstufen betrug ca. 6 Minuten.

Der Schmelzpunkt (TM) des hergestellten Polymers beträgt 152,7 °C (DSC, 2. Aufheizung mit 20 K/min).

### Beispiel 6: Herstellung eines erfindungsgemäß verwendbaren Polymers

In einem Versuchsaufbau wie in Beispiel 3 beschrieben wurden 311,7 g/h 1,6-Hexamethylendiisocyanat mit der Pumpe 100, 176,1 g/h 1,3-Propandiol mit der Pumpe 200, sowie 73,9 g/h 1,6-Hexamethylendiisocyanat mit der Pumpe 300 dosiert und zur Reaktion gebracht. Die mittlere Verweilzeit über alle Verfahrensstufen betrug ca. 7 Minuten.

Der Schmelzpunkt (TM) des hergestellten Polymers betrug 161,8 °C (DSC, 2. Aufheizung mit 20 K/min).

### Beispiel 7: Herstellung eines erfindungsgemäß verwendbaren Polymers

In einem Versuchsaufbau wie in Beispiel 3 beschrieben wurden 285,7 g/h 1,5-Pentamethylendiisocyanat mit der Pumpe 100, 176,2 g/h 1,3-Propandiol mit der Pumpe 200, sowie 64,3 g/h 1,5-Pentamethylendiisocyanat mit der Pumpe 300 dosiert und zur Reaktion gebracht. Die mittlere Verweilzeit über alle Verfahrensstufen betrug ca. 7 Minuten.

Der Schmelzpunkt (TM) des hergestellten Polymers betrug 153,3 °C (DSC, 2. Aufheizung mit 20 K/min).

### Beispiel 8: Herstellung eines erfindungsgemäß verwendbaren Polymers

In einem Versuchsaufbau wie in Beispiel 3 beschrieben wurden 285,7 g/h 1,5-Pentamethylendiisocyanat mit der Pumpe 100, 208,7 g/h 1,4-Butandiol mit der Pumpe 200, sowie 67,8 g/h 1,5-Pentamethylendiisocyanat mit der Pumpe 300 dosiert und zur Reaktion gebracht. Die mittlere Verweilzeit über alle Verfahrensstufen betrug ca. 7 Minuten.

Der Schmelzpunkt (TM) des hergestellten Polymers betrug 160,9 °C (DSC, 2. Aufheizung nach Abkühlung mit 20 K/min).

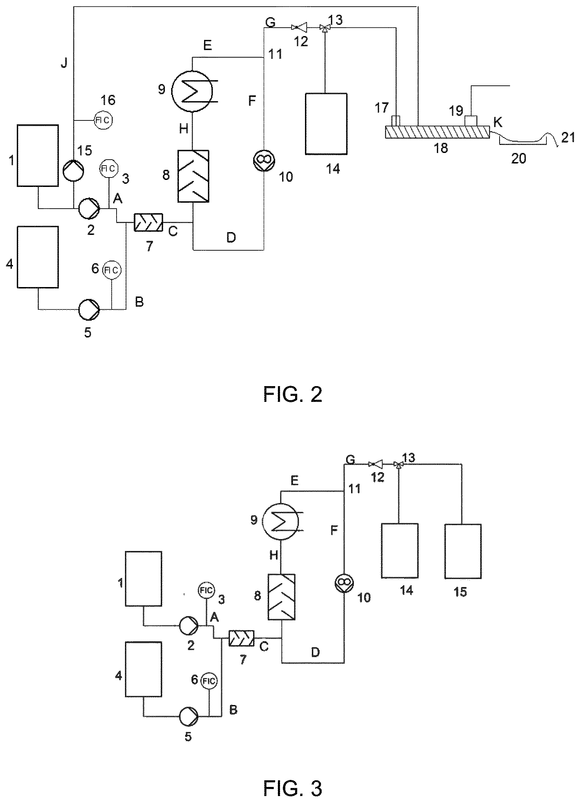

### Beispiel 9 (Figur 2): Herstellung eines erfindungsgemäß verwendbaren Polymers

Aus einer 250 Liter-Vorlage für 1,6-Hexamethylendiisocyanat 1 wurde mit Hilfe einer Zahnringpumpe 2 (Firma HNP, MZR 7255) ein 1,6-Hexamethylendiisocyanat -Strom A zu einem Statikmischer 7 gefördert. Der Durchsatz des 1,6-Hexamethylendiisocyanat -Stroms A wurde mittels eines Massedurchflussmessers 3 (Firma Bronkhorst, Mini Cori-Flow M1X, max. Durchfluss 12 kg/h) gemessen und auf einen Wert von 2,911 kg/h eingeregelt. Aus einer 250 - Liter - Vorlage für 1,4-Butandiol 4 wurde mit Hilfe einer Zahnringpumpe 5 (Firma HNP, MZR 7205) ein 1,4-Butandiol-Strom B zum Statikmischer 7 gefördert. Der Durchsatz des 1,4-Butandiol-Stroms wurde mittels eines Massedurchflussmessers 6 (Firma Bronkhorst, Mini Cori-Flow M1X, max. Durchfluss 8 kg/h) gemessen und auf einen Wert von 2,000 kg/h eingeregelt. Die Temperatur des 1,6-Hexamethylendiisocyanats betrug dabei Umgebungstemperatur, ca. 25 °C. Die Temperatur des 1,4-Butandiols betrug 40 °C. In dem Statikmischer 7 (Sulzer SMX, Durchmesser 6 mm, Verhältnis von Länge zu Durchmesser L/D = 10) wurden der 1,6-Hexamethylendiisocyanat-Strom A und der 1,4-Butandiol-Strom B miteinander gemischt. Dies ist der Strom C.

Der gemischte und dispergierte Strom C wird in einem Umlauf mit einem umlaufenden Polymerstrom D in einem Statikmischer 8 (Statikmischer äquivalent zu Sulzer SMX, Innendurchmesser 34 mm, L/D=20) zu einem Strom H gemischt. Die Temperatur des Stromes D betrug 182 °C.

Der gemischte und teilweise schon reagierte Strom H wurde in einen temperierbaren statischen Mischer 9 geführt. Dort lief die Reaktion zum großen Teil ab und die entstehende Reaktionswärme wurde abgeführt. Der temperierbare statische Mischer 9 war ähnlich aufgebaut wie ein Sulzer SMR-Reaktor mit innenliegenden, gekreuzten Rohren. Er hatte ein Innenvolumen von 1,9 Litern, eine Wärmeaustauschfläche von 0,31 Quadratmeter und ein Wärmeaustauschvermögen von 98 Kilowatt pro Kubikmeter und Kelvin. Er war mit Wärmeträgeröl beheizt/gekühlt. Die Heizmitteltemperatur am Eintritt betrug 180 °C.

Aus dem temperierbaren statischen Mischer 9 trat der Produktstrom als weitgehend ausreagierter Strom E mit einer Temperatur von 183 °C aus. Der Strom E wurde an einer Verzweigung 11 in zwei Teilströme F und G aufgespalten. Der Druck des Teilstrom F wurde an einer Zahnradpumpe 10 erhöht. Der Teilstrom F wurde nach der Pumpe zum oben erwähnten Teilstrom D.

Die Zahnradpumpe 10 (Firma Witte Chem 25,6-3) hatte ein Volumen pro Umdrehung von 25,6 Kubikzentimeter und eine Drehzahl von 50 pro Minute.

Die ganze Umlauf war voll gefüllt. Daher war der Massenstrom des Stroms G identisch mit dem des Stroms C. Der Strom G bestand aus Oligomer.

Der ganze Umlauf bestand aus doppelwandig ausgeführten Rohrleitungen und Apparaten, die mit Thermoöl beheizt waren. Die Heizmitteltemperatur betrug 182 °C.

Nach dem Druckhalteventil 12 wurde der Strom G an einem Dreiwegeventil 13 vorbeigeführt. Dort konnte es bei An- und Abfahren oder bei Störungen auf einen Abfallbehälter 14, ein offenes 200-Liter-Metallfass mit Absaugung, gefahren werden. Im regulären Betrieb wurde der Strom G auf einen Extruder 18 geleitet.

Aus der 1,6-Hexamethylendiisocyanat-Vorlage 1 wurde mit Hilfe einer Mikrozahnringpumpe 15 (MZR 6355 der Firma HNP) ein 1,6-Hexamethylendiisocyanat-Strom J entnommen. Der Durchsatz des 1,6-Hexamethylendiisocyanat-Stroms J wurde mittels eines Massedurchflussmessers 16 (Firma Bronkhorst, Mini Cori-Flow, M1X, maximaler Durchfluss 2 kg/h) gemessen und auf 0,784 Kilogramm pro Stunde eingeregelt. Die Temperatur des 1,6-Hexamethylendiisocyanat-Stroms J betrug ebenfalls Raumtemperatur, etwa 25 °C. Dieser Strom wurde ebenfalls auf den Extruder 18 geleitet.

Der Extruder 18 war eine ZSK 26 MC der Firma Coperion, der bei Temperaturen von 200 °C und einer Drehzahl von 66 Umdrehungen pro Minute betrieben wurden. Auf diesem Extruder wurde der Strom G über eine Entlüftung 17, die bei ca. 1 mbar Unterdruck gegenüber dem Umgebungsdruck betrieben wurde, von eventuell mit den Stoffströmen A und B eingeschleppten Inertgasen und möglichen flüchtigen Reaktionsprodukten befreit. Stromab von der Zugabe des Oligomerstroms G wurde der 1,6-Hexamethylendiisocyanat-Strom J zugegeben und die Reaktion zum Polymer durchgeführt. Vor Ende des Extruders wurde der entstehende Polymerstrom über eine Entgasung 19 noch von flüchtigen Bestandteilen befreit. Der Druck in dieser Entgasung betrug 200 mbar unter Umgebungsdruck. Der Polymerstrom K wurde durch zwei Düsen ausgepresst, in einem mit VE-Wasser gefüllten Wasserbad abgekühlt und durch einen Granulator 21 zu Granulat zerschnitten. Die mittlere Verweilzeit über alle Verfahrensstufen betrug 51 Minuten.

Der Schmelzpunkt (TM) des Polymers betrug 185,2 °C (DSC, 2. Aufheizung mit 20 K/min).

Das Molekulargewicht des Polymers nach GPC betrug Mn 10880 g/mol, Mw 54200 g/mol.

Mechanische Eigenschaften:
- Langsamer Dreipunkt-Biegeversuch an 80x10x4 mm³-Stäben bei Raumtemperatur, durchgeführt mit einer Universalprüfmaschine 5566 der Fa. Instron mit einer Geschwindigkeit von 5 mm/min und einem Auflagerabstand von 64 mm.
- Langsamer Zugversuche bei Raumtemperatur, durchgeführt mit einer Universalprüfmaschine Z010 der Fa. Zwick mit einer Geschwindigkeit von 10 mm/min.
- Schlagversuch in Anlehnung an Charpy bei Raumtemperatur, durchgeführt mit einem instrumentierten Fallwerk (Eigenbau der Polymerphysik) mit 1,86 kg Fallmasse und Fallhöhe von 50 cm, Kerbradius 0,25 mm.

Biegemodul [MPa]: 1920 ± 20; max. Spannung [MPa]: 81,4 ± 0,2; Dehnung bei max. Spannung [%]: 7,8 ± 0,1
Zugversuch: Zugmodul [MPa] 2210 ± 58; Streckspannung [MPa]: 9,62 ± 0,4; Dehnung Streckspannung [%]: 37,6 ± 29,8; max. Zugspannung [MPa]: 62,9 ± 1,4
Kerbschlag (RT): Ak / 50 cm / 4 mm [kJ/m²]: 2,4 ± 0,4; Bruchart (n.b./p/c)*: c / c / c
*Bruchart: ohne Riss (n.b.) / angerissen (p) / gebrochen (c)

### Beispiel 10 (Figur 2): Herstellung eines erfindungsgemäß verwendbaren Polymers

In einem Versuchsaufbau wie in Beispiel 9 beschrieben wurden diesmal aus Vorlage 1 2,711 kg/h 1,5-Pentamethylendiisocyanat (Strom A), sowie aus Vorlage 4 2,000 kg/h 1,4-Butandiol (Strom B) in den Statikmischer 7 gefördert. Der Durchsatz des 1,5-Pentamethylendiisocyanat-Stroms J wurde auf 0,677 Kilogramm pro Stunde eingeregelt.

Die Temperaturen der Rohstoffe und die Temperaturen der anderen Stoffströme sowie der Anlagenteile und Heizmittel entsprachen denen wie in Beispiel 9 beschrieben. Auch die Drehzahl des Extruders und die Drücke der Entgasungen entsprachen denen in Beispiel 9. Die mittlere Verweilzeit über alle Verfahrensstufen betrug 53 Minuten.

Der Schmelzpunkt (TM) des hergestellten Polymers betrug 159,0 °C (DSC, 2. Aufheizung mit 20 K/min).

### Beispiel 11: Herstellung eines erfindungsgemäß verwendbaren Polymers

In einem mit Stickstoff inertisierten 10l Druckkessel mit Ankerrührer, Bodenablass und Innenthermometer und Rückflusskühler wurden 1,4-Butandiol (0,360 kg) unter Stickstoff (1 bar) mit 0,1g DBTL in 4kg Aceton vorgelegt und gerührt, bis eine Innentemperatur von 50 °C erreicht wurde. Über einen Zeitraum von 2 h wurde anschließend die Gesamtmenge an 1,6-Hexamethylendiisocyanat kontinuierlich in den Druckkessel dosiert (0,672 kg), wobei bei der Zugabe darauf geachtet wurde, dass die Reaktortemperatur 56°C nicht überschreitet, was unter anderem durch die Siedekühlung des Acetons gewährleistet wurde. Nach Beendigung der Zugabe von 1,6-Hexamethylendiisocyanat wurde noch weitere 5 Stunden bei 50 °C gerührt bis der Isocyanatgehalt nacht Titration der Acetonlösung auf 0% abgefallen war, das Polymere fiel dabei als weißes feines Feststoffpulver quantitativ aus und wurde nach Abkühlen auf 23 °C filtriert, mit Wasser gewaschen und im Trockenschrank bei 100 °C über 12h getrocknet.

Der Schmelzpunkt (TM) des Polymers betrug 174,2 °C (DSC, 2. Aufheizung mit 20 K/min).

### Vergleichsbeispiel 12: Herstellung eines nicht erfindungsgemäß verwendbaren Polymers

In einem mit Stickstoff inertisierten 10l Druckkessel mit Ankerrührer, Bodenablass und Innenthermometer und Rückflusskühler wurden Neopentylglycol (0,416 kg) unter Stickstoff (1 bar) mit 0,1g DBTL in 4kg Aceton vorgelegt und gerührt, bis eine Innentemperatur von 50 °C erreicht wurde. Über einen Zeitraum von 2 h wurde anschließend die Gesamtmenge an 1,6-Hexamethylendiisocyanat kontinuierlich in den Druckkessel dosiert (0,672 kg), wobei bei der Zugabe darauf geachtet wurde, dass die Reaktortemperatur 56°C nicht überschreitet, was unter anderem durch die Siedekühlung des Acetons gewährleistet wurde. Nach Beendigung der Zugabe von 1,6-Hexamethylendiisocyanat wurde noch weitere 5 Stunden bei 50 °C gerührt bis der Isocyanatgehalt nach Titration der Acetonlösung auf 0% abgefallen war. Das Polymere war löslich in Aceton und wurde durch Abdestillation des Acetons bei 100 °C getrocknet. Das Polymere fällt dabei als hochviskose Masse an.

Der Glaspunkt (TG) des Polymers betrug 5,5 °C, ein Schmelzpunkt konnte nicht festgestellt werden. (DSC, 2. Aufheizung mit 20 K/min). Das Molekulargewicht des Polymeren nach GPC (THF, Kalibrierung gegen Polystryrol Standard) betrug Mw = 23.000 g/mol.

### Vergleichsbeispiel 13: Herstellung eines nicht erfindungsgemäß verwendbaren Polymers

In einem mit Stickstoff inertisierten 10l Druckkessel mit Ankerrührer, Bodenablass und Innenthermometer und Rückflusskühler wurden Butandiol (0,360 kg) unter Stickstoff (1 bar) mit 0,1g DBTL in 4kg Aceton vorgelegt und gerührt, bis eine Innentemperatur von 50 °C erreicht wurde. Über einen Zeitraum von 2 h wurde anschließend die Gesamtmenge an H12-MDI kontinuierlich in den Druckkessel dosiert (1,040 kg), wobei bei der Zugabe darauf geachtet wurde, dass die Reaktortemperatur 56°C nicht überschreitet, was unter anderem durch die Siedekühlung des Acetons gewährleistet wurde. Nach Beendigung der Zugabe von 1,6-Hexamethylendiisocyanat wurde noch weitere 5 Stunden bei 50 °C gerührt bis der Isocyanatgehalt nach Titration der Acetonlösung auf 0% abgefallen war. Das Polymere fiel dabei als weißes feines Feststoffpulver quantitativ aus und wurde nach Abkühlen auf 23 °C filtriert, mit Wasser gewaschen und im Trockenschrank bei 100 °C über 12h getrocknet. Der Glaspunkt (Tg) des Polymers betrug 95°C, ein Schmelzpunkt konnte nicht festgestellt werden (DSC, 2. Aufheizung mit 20 K/min).

### Vergleichsbeispiel 14: Herstellung eines nicht erfindungsgemäß verwendbaren Polymers

In einem Gehäuse 1 eines Zweiwellenextruders (ZSK 53 der Fa. Werner&Pfleiderer) wurden 64,4 kg/h 1,6-Hexamethylendiisocyanat, erwärmt auf 105 °C, sowie eine Mischung aus 22,8 kg/h eines poly-THF-Diols (1000 g/mol, Fa. BASF) mit 32,9 kg/h 1,4-Butandiol, erwärmt auf 110 °C, dosiert. Die Drehzahl des Extruders lag bei 270 U/min. Die Verweilzeit im Extruder lag bei ca. 42 Sekunden. Am Ausgang des Extruders wurde die Schmelze durch ein Einlagen-Metallsieb mit einer Maschenweite von 200 Mikrometer filtriert, als Strang abgezogen, im Wasserbad gekühlt und granuliert.

Der Schmelzpunkt (TM) des hergestellten Polymers beträgt 182,0 °C (DSC, 2. Aufheizung mit 20 K/min).

### Vergleichsbeispiel 15: Herstellung eines nicht erfindungsgemäß verwendbaren Polymers

### HDI-BDO (NCO-INDEX: 0.7)

Es werden 100 g (1.11 mol) 1,4-Butandiol in einem 500 mL Kolben unter Stickstoff bei RT vorgelegt. Anschließend werden zügig 100 g 1,6- Hexamethylendiisocyanat (HDI) unter Stickstoff zugegeben und unter Rühren die Masse zusammen mit dem Ölbad langsam auf 190 °C erwärmt.

Nun werden die restlichen 30,64 g (insgesamt 0,78 mol) HDI unter stetem Rühren langsam zugegeben, so dass die Temperatur 200 °C nicht übersteigt. Nach beendeter Zugabe wird noch 20 min bei 200 °C gerührt, das Produkt in eine Aluminiumschale gegossen und Abkühlen gelassen.

Der Schmelzpunkt (TM) des hergestellten Polymers betrug 167,0 °C (DSC, 2. Aufheizung mit 5 K/min). Halbwertsbreite: 17,1 K; die bei einer Aufheiz- und Abkühlrate von 20 K/min bestimmte Differenz aus der Schmelztemperatur und der Rekristallisationstemperatur beträgt 29,6 °C.

Elementaranalyse (Gew.-%): Kohlenstoff (C): 55,1; Wasserstoff (H): 8,9; Stickstoff (N): 9,3; Sauerstoff (O): 27,0. Verhältnis O:N = 2,90; Verhältnis N:C = 0,169.

### Vergleichsbeispiel 16: Herstellung eines nicht erfindungsgemäß verwendbaren Polymers

### HDI-BDO (NCO-INDEX: 0.8)

Es werden 100 g (1.11 mol) 1,4-Butandiol in einem 500 mL Kolben unter Stickstoff bei RT vorgelegt. Anschließend werden zügig 100 g 1,6- Hexamethylendiisocyanat (HDI) unter Stickstoff zugegeben und unter Rühren die Masse zusammen mit dem Ölbad langsam auf 190 °C erwärmt.

Nun werden die restlichen 49,2 g (insgesamt 0,89 mol) HDI unter stetem Rühren langsam zugegeben, so dass die Temperatur 200 °C nicht übersteigt. Nach beendeter Zugabe wird noch 20 min bei 200 °C gerührt, das Produkt in eine Aluminiumschale gegossen und

Der Schmelzpunkt (TM) des hergestellten Polymers betrug 178,6 °C (DSC, 2. Aufheizung mit 5 K/min). Halbwertsbreite: 15,1 K; die bei einer Aufheiz- und Abkühlrate von 20 K/min bestimmte Differenz aus der Schmelztemperatur und der Rekristallisationstemperatur beträgt 41,9 °C.

Elementaranalyse (Gew.-%): Kohlenstoff (C): 55,1; Wasserstoff (H): 8,9; Stickstoff (N): 9,8; Sauerstoff (O): 26,5. Verhältnis O:N = 2,70; Verhältnis N:C = 0,178.

### Vergleichsbeispiel 17: Herstellung eines nicht erfindungsgemäß verwendbaren Polymers

### HDI-BDO (NCO-INDEX: 1.2)

Es werden 168 g (1.0 mol) 1,6- Hexamethylendiisocyanat (HDI) in einem 500 mL Kolben unter Stickstoff (sekurieren!) bei RT vorgelegt. Anschließend werden zügig 50 g 1,4- Butandiol (BDO) unter Stickstoff zugegeben und unter Rühren die Masse zusammen mit dem Ölbad langsam auf 170 °C erwärmt.

Nun werden die restlichen 22 g (insgesamt 0,8 mol) BDO unter stetem Rühren langsam zugegeben, so dass die Temperatur 180 °C nicht übersteigt. Nach beendeter Zugabe wird noch 10 min bei 180 °C gerührt, das Produkt in Plastikflasche (PP)/ Aluminiumflasche (die in einem Wasserbad steht) gegossen und abkühlen gelassen.

Der Schmelzpunkt (TM) des hergestellten Polymers betrug 154,0 °C (DSC, 2. Aufheizung mit 5 K/min). Halbwertsbreite: 23,2 K; die bei einer Aufheiz- und Abkühlrate von 20 K/min bestimmte Differenz aus der Schmelztemperatur und der Rekristallisationstemperatur beträgt 94,8 °C.

Elementaranalyse (Gew.-%): Kohlenstoff (C): 55,6; Wasserstoff (H): 8,7; Stickstoff (N): 11,5; Sauerstoff (O): 24,4. Verhältnis O:N = 2,12; Verhältnis N:C = 0,21.

### Vergleichsbeispiel 18: Herstellung eines nicht erfindungsgemäß verwendbaren Polymers

### HDI-BDO (NCO-INDEX: 0,81)

Figur 3 zeigt schematisch den Aufbau zur Durchführung der einstufigen kontinuierlichen Herstellung eines thermoplastischen Polyurethans mit hohem Hartsegmentanteil.

Aus einer 250 - Liter - Vorlage für 1,6-Hexamethylendiisocyanat 1 wurde mit Hilfe einer Zahnringpumpe 2 (Firma HNP, MZR 7255) ein 1,6-Hexamethylendiisocyanat -Strom A zu einem Statikmischer 7 gefördert. Der Durchsatz des 1,6-Hexamethylendiisocyanat -Stroms A wurde mittels eines Massedurchflussmessers 3 (Firma Bronkhorst, Mini Cori-Flow M1X, max. Durchfluss 12 kg/h) gemessen. Aus einer 250 - Liter - Vorlage für 1,4-Butandiol 4 wurde mit Hilfe einer Zahnringpumpe 5 (Firma HNP, MZR 7205) ein 1,4-Butandiol-Strom B zum Statikmischer 7 gefördert. Der Durchsatz des 1,4-Butandiol-Stroms wurde mittels eines Massedurchflussmessers 6 (Firma Bronkhorst, Mini Cori-Flow M1X, max. Durchfluss 8 kg/h) gemessen. Die Temperatur des 1,6-Hexamethylendiisocyanats betrug dabei Raumtemperatur. Die Temperatur des 1,4-Butandiols betrug 40 °C. In dem Statikmischer 7 (Sulzer SMX, Durchmesser 6 mm, Verhältnis von Länge zu Durchmesser L/D = 10) wurden der 1,6-Hexamethylendiisocyanat-Strom A und der 1,4-Butandiol-Strom B miteinander gemischt. Dies ist der Strom C.

Der gemischte und dispergierte Strom C wird in einem Umlauf mit einem umlaufenden Polymerstrom D in einem Statikmischer 8 (Statikmischer äquivalent zu Sulzer SMX, Innendurchmesser 34 mm, L/D=20) zu einem Strom H gemischt. Die Temperatur des Stromes D betrug 182 °C.

Der gemischte und teilweise schon reagierte Strom H wurde in einen temperierbaren statischen Mischer 9 geführt. Dort lief die Reaktion zum großen Teil ab und die entstehende Reaktionswärme wurde abgeführt. Der temperierbare statische Mischer 9 war ähnlich aufgebaut wie ein Sulzer SMR-Reaktor mit innenliegenden, gekreuzten Rohren. Er hatte ein Innenvolumen von 1,9 Litern, eine Wärmeaustauschfläche von 0,44 Quadratmeter. Er war mit Wärmeträgeröl beheizt/gekühlt. Die Heizmitteltemperatur am Eintritt betrug 180 °C.

Aus dem temperierbaren statischen Mischer 9 trat der Produktstrom als weitgehend ausreagierter Strom E mit einer Temperatur von 183 °C aus. Der Strom E wurde an einer Verzweigung 11 in zwei Teilströme F und G aufgespalten. Der Druck des Teilstrom F wurde an einer Zahnradpumpe 10 erhöht. Der Teilstrom F wurde nach der Pumpe zum oben erwähnten Teilstrom D.

Die Zahnradpumpe 10 (Firma Witte Chem 25,6-3), hatte ein Volumen pro Umdrehung von 25,6 Kubikzentimeter und eine Drehzahl von 50 pro Minute.

Die ganze Umlauf war voll gefüllt und das Polymer zum großen Teil inkompressibel. Daher war der Massenstrom des Stroms G identisch mit dem des Stroms C. Der Strom G bestand aus dem gewünschten Prepolymer.

Der ganze Umlauf bestand aus doppelwandig ausgeführten Rohrleitungen und Apparaten, die mit Thermoöl beheizt waren. Die Heizmitteltemperatur betrug 182 °C.

Hinter dem Druckhalteventil 12 wurde der Strom G an einem Dreiwegeventil 13 vorbeigeführt. Dort konnte es bei An- und Abfahren oder bei Störungen auf einen Abfallbehälter 14, ein offenes 60-Liter-Metallfass mit Absaugung, gefahren werden oder in den Produktaufnahmebehälter 15, ein offenes 120-Liter-Metallfass mit Absaugung.

Die verwendete Probe wurde nach 4 h nach vollständigem Einschwingen des Prozesses genommen.

### Molekulargewichtsmittel (GPC): Mw = 19100 g/mol.

Der Schmelzpunkt (TM) des hergestellten Polymers betrug 175,9 °C (DSC, 2. Aufheizung mit 5 K/min). Halbwertsbreite: 11,7 K; die bei einer Aufheiz- und Abkühlrate von 20 K/min bestimmte Differenz aus der Schmelztemperatur und der Rekristallisationstemperatur beträgt 40,7 °C.

Elementaranalyse (Gew.-%): Kohlenstoff (C): 55,3; Wasserstoff (H): 9,4; Stickstoff (N): 9,8; Sauerstoff (O): 25,8. Verhältnis O:N = 2,633; Verhältnis N:C = 0,177.

### Vergleichsbeispiel 19: Herstellung eines nicht erfindungsgemäß verwendbaren Polymers

### HDI-BDO (NCO-INDEX: 0,7)

Figur 3 zeigt schematisch den Aufbau zur Durchführung der einstufigen kontinuierlichen Herstellung eines thermoplastischen Polyurethans mit hohem Hartsegmentanteil.

Aus einer 250 - Liter - Vorlage für 1,6-Hexamethylendiisocyanat 1 wurde mit Hilfe einer Zahnringpumpe 2 (Firma HNP, MZR 7255) ein 1,6-Hexamethylendiisocyanat -Strom A zu einem Statikmischer 7 gefördert. Der Durchsatz des 1,6-Hexamethylendiisocyanat -Stroms A wurde mittels eines Massedurchflussmessers 3 (Firma Bronkhorst, Mini Cori-Flow M1X, max. Durchfluss 12 kg/h) gemessen. Aus einer 250 - Liter - Vorlage für 1,4-Butandiol 4 wurde mit Hilfe einer Zahnringpumpe 5 (Firma HNP, MZR 7205) ein 1,4-Butandiol-Strom B zum Statikmischer 7 gefördert. Der Durchsatz des 1,4-Butandiol-Stroms wurde mittels eines Massedurchflussmessers 6 (Firma Bronkhorst, Mini Cori-Flow M1X, max. Durchfluss 8 kg/h) gemessen. Die Temperatur des 1,6-Hexamethylendiisocyanats betrug dabei Raumtemperatur. Die Temperatur des 1,4-Butandiols betrug 40 °C. In dem Statikmischer 7 (Sulzer SMX, Durchmesser 6 mm, Verhältnis von Länge zu Durchmesser L/D = 10) wurden der 1,6-Hexamethylendiisocyanat-Strom A und der 1,4-Butandiol-Strom B miteinander gemischt. Dies ist der Strom C.

Der gemischte und dispergierte Strom C wird in einem Umlauf mit einem umlaufenden Polymerstrom D in einem Statikmischer 8 (Statikmischer äquivalent zu Sulzer SMX, Innendurchmesser 34 mm, L/D=20) zu einem Strom H gemischt. Die Temperatur des Stromes D betrug 182 °C.

Der gemischte und teilweise schon reagierte Strom H wurde in einen temperierbaren statischen Mischer 9 geführt. Dort lief die Reaktion zum großen Teil ab und die entstehende Reaktionswärme wurde abgeführt. Der temperierbare statische Mischer 9 war ähnlich aufgebaut wie ein Sulzer SMR-Reaktor mit innenliegenden, gekreuzten Rohren. Er hatte ein Innenvolumen von 1,9 Litern, eine Wärmeaustauschfläche von 0,44 Quadratmeter. Er war mit Wärmeträgeröl beheizt/gekühlt. Die Heizmitteltemperatur am Eintritt betrug 180 °C.

Aus dem temperierbaren statischen Mischer 9 trat der Produktstrom als weitgehend ausreagierter Strom E mit einer Temperatur von 183 °C aus. Der Strom E wurde an einer Verzweigung 11 in zwei Teilströme F und G aufgespalten. Der Druck des Teilstrom F wurde an einer Zahnradpumpe 10 erhöht. Der Teilstrom F wurde nach der Pumpe zum oben erwähnten Teilstrom D.

Die Zahnradpumpe 10 (Firma Witte Chem 25,6-3), hatte ein Volumen pro Umdrehung von 25,6 Kubikzentimeter und eine Drehzahl von 50 pro Minute.

Die ganze Umlauf war voll gefüllt und das Polymer zum großen Teil inkompressibel. Daher war der Massenstrom des Stroms G identisch mit dem des Stroms C. Der Strom G bestand aus dem gewünschten Prepolymer.

Der ganze Umlauf bestand aus doppelwandig ausgeführten Rohrleitungen und Apparaten, die mit Thermoöl beheizt waren. Die Heizmitteltemperatur betrug 182 °C.

Hinter dem Druckhalteventil 12 wurde der Strom G an einem Dreiwegeventil 13 vorbeigeführt. Dort konnte es bei An- und Abfahren oder bei Störungen auf einen Abfallbehälter 14, ein offenes 60-Liter-Metallfass mit Absaugung, gefahren werden oder in den Produktaufnahmebehälter 15, ein offenes 120-Liter-Metallfass mit Absaugung.

Die verwendete Probe wurde nach 4h nach vollständigem Einschwingen des Prozesses genommen.

### Molekulargewichtsmittel (GPC): Mw = 6200 g/mol.

Der Schmelzpunkt (TM) des hergestellten Polymers betrug 170,3 °C (DSC, 2. Aufheizung mit 5 K/min). Halbwertsbreite: 14,4 K; die bei einer Aufheiz- und Abkühlrate von 20 K/min bestimmte Differenz aus der Schmelztemperatur und der Rekristallisationstemperatur beträgt 38,9°C

Elementaranalyse (Gew.-%): Kohlenstoff (C): 54,9; Wasserstoff (H): 9,6; Stickstoff (N): 9,2; Sauerstoff (O): 26,5. Verhältnis O:N = 2,880; Verhältnis N:C = 0,168.

### Beispiel 20: Herstellung eines erfindungsgemäß verwendbaren Polymers als Wiederholung von Beispiel 3.

### HDI-BDO (NCO-INDEX: 0,98)

Figur 1 zeigt schematisch den Aufbau zur Durchführung der zweistufigen kontinuierlichen Herstellung eines thermoplastischen Polyurethans mit hohem Hartsegmentanteil.

Aus Vorlage 1 wurden 311,7 g/h 1,6-Hexamethylendiisocyanat mit der Pumpe 100 (Typ: SyrDos2 mit 10 mL-Spritzen der Firma HiTec Zang) in den Mischer 100 gefördert. Zeitgleich wurden aus Vorlage 2 208,7 g/h 1,4-Butandiol mit der Pumpe 200 (Typ: SyrDos2 mit 10 mL-Spritzen der Firma HiTec Zang) ebenfalls in den Mischer 100 gefördert. Bei Raumtemperatur wurden beide Stoffströme in den Mischer 100 gemischt. Als Mischer wurde ein Kaskadenmischer der Firma Ehrfeld Microtechnik BTS GmbH verwendet. Die Mischung wurde anschließend in den bei 190 °C temperierten Reaktor 100 (Typ CSE-X/8G, Form G, Innendurchmesser = 12,3 mm, Länge = 500 mm der Firma Fluitec, Wärmeaustauschvermögen von 60 Kilowatt pro Kubikmeter und Kelvin) geleitet. Die Verweilzeit im Reaktor betrug 5 min. Das aus Reaktor 100 kontinuierlich austretende Prepolymer wurde durch eine auf 200 °C beheizte Rohrleitung in das zweite Gehäuse eines 2-Wellen Extruder (Miniextruder Process 11/Thermo Fisher) überführt. Der Extruder wurde über seine gesamte Länge auf 200 °C beheizt und die Drehzahl der Wellen betrug 100 U/min. Anschließend wurden in Gehäuse 3 des Extruders 70,1 g/h 1,6-Hexamethylendiisocyanat mit der Pumpe 300 (Typ: SyrDos2 mit 10 mL-Spritzen der Firma HiTec Zang) gefördert. Das entstandene milchig-weiße Produkt wurde durch die Extruderdüsen ausgetragen, als Strang abgezogen, im Wasserbad gekühlt und granuliert. Die mittlere Verweilzeit über alle Verfahrensstufen betrug ca. 6 Minuten.

### Molekulargewichtsmittel (GPC): Mw = 132000 g/mol.

Der Schmelzpunkt (TM) des hergestellten Polymers betrug 181,1 °C (DSC, 2. Aufheizung mit 5 K/min). Halbwertsbreite: 8,24 K; die bei einer Aufheiz- und Abkühlrate von 20 K/min bestimmte Differenz aus der Schmelztemperatur und der Rekristallisationstemperatur beträgt 32,1°C.

Elementaranalyse (Gew.-%): Kohlenstoff (C): 55,9; Wasserstoff (H): 9,0; Stickstoff (N): 10,3; Sauerstoff (O): 25,1. Verhältnis O:N = 2,437; Verhältnis N : C = 0,184.

### Die Härte lag über 75 Shore D.

### Beispiel 21: Herstellung eines erfindungsgemäß verwendbaren Polymers

### HDI-BDO (NCO-INDEX: 0,95)

Figur 1 zeigt schematisch den Aufbau zur Durchführung der zweistufigen kontinuierlichen Herstellung eines thermoplastischen Polyurethans mit hohem Hartsegmentanteil.

Aus Vorlage 1 wurden 311,7 g/h 1,6-Hexamethylendiisocyanat mit der Pumpe 100 (Typ: SyrDos2 mit 10 mL-Spritzen der Firma HiTec Zang) in den Mischer 100 gefördert. Zeitgleich wurden aus Vorlage 2 208,7 g/h 1,4-Butandiol mit der Pumpe 200 (Typ: SyrDos2 mit 10 mL-Spritzen der Firma HiTec Zang) ebenfalls in den Mischer 100 gefördert. Bei Raumtemperatur wurden beide Stoffströme in den Mischer 100 gemischt. Als Mischer wurde ein Kaskadenmischer der Firma Ehrfeld Microtechnik BTS GmbH verwendet. Die Mischung wurde anschließend in den bei 190 °C temperierten Reaktor 100 (Typ CSE-X/8G, Form G, Innendurchmesser = 12,3 mm, Länge = 500 mm der Firma Fluitec, Wärmeaustauschvermögen von 60 Kilowatt pro Kubikmeter und Kelvin) geleitet. Die Verweilzeit im Reaktor betrug 5 min. Das aus Reaktor 100 kontinuierlich austretende Prepolymer wurde durch eine auf 200 °C beheizte Rohrleitung in das zweite Gehäuse eines 2-Wellen Extruder (Miniextruder Process 11/Thermo Fisher) überführt. Der Extruder wurde über seine gesamte Länge auf 200 °C beheizt und die Drehzahl der Wellen betrug 100 U/min. Anschließend wurden in Gehäuse 3 des Extruders 58,7 g/h 1,6-Hexamethylendiisocyanat mit der Pumpe 300 (Typ: SyrDos2 mit 10 mL-Spritzen der Firma HiTec Zang) gefördert. Das entstandene milchig-weiße Produkt wurde durch die Extruderdüsen ausgetragen, als Strang abgezogen, im Wasserbad gekühlt und granuliert. Die mittlere Verweilzeit über alle Verfahrensstufen betrug ca. 6 Minuten.

### Molekulargewichtsmittel (GPC): Mw = 34000 g/mol.

Der Schmelzpunkt (TM) des hergestellten Polymers betrug 181,4 °C (DSC, 2. Aufheizung mit 5 K/min). Halbwertsbreite: 8,26 K; die bei einer Aufheiz- und Abkühlrate von 20 K/min bestimmte Differenz aus der Schmelztemperatur und der Rekristallisationstemperatur beträgt 31,1°C. Elementaranalyse (Gew.-%): Kohlenstoff (C): 55,7; Wasserstoff (H): 9,2; Stickstoff (N): 10,5; Sauerstoff (O): 25,6. Verhältnis O:N = 2,438; Verhältnis N:C = 0,189.

Die Härte lag über 75 Shore D.

### Vergleichsbeispiel 22: TPU Desmopan 3660 DU

Dieses thermoplastische Polyurethan wurde als TPU 3 im Beispielteil der internationalen Patentanmeldung WO 2018/197396 erwähnt.

Der Schmelzpunkt (TM) von TPU 3660 beträgt 173,9°C und die Schmelzpunktbreite beträgt 24,32 °C, Die bei einer ersten Aufheiz- und Abkühlrate von 20 K/min bestimmte Differenz aus der Schmelztemperatur und der Rekristallisationstemperatur beträgt 25,8 °C.

Elementaranalyse (Gew.-%): Kohlenstoff (C): 64,4; Wasserstoff (H): 7,3; Stickstoff (N): 4,9; Sauerstoff (O): 24,2. Verhältnis O:N = 4,939; Verhältnis N:C = 0,076.

Die Härte betrug 60 Shore D.

**Tabelle 1: Viskositätsverhältnisse bei verschiedenen Temperaturen**

| Die Proben wurden vor der Messung 4 Tage bei 40 °C im Vakuumschrank getrocknet, bei 190 °C zu Probenkörpern verpresst und mit dem ARES-Rheometer, System PP35mm, unter N₂-Atmosphäre gemessen. Das als Vergleichsbeispiel untersuchte Material Farsoon FS 2200 PA war ein PA 12-Material. Die Angabe η* bezeichnet die komplexe Viskosität. Erfindungsgemäße Beispiele sind mit * gekennzeichnet. | | | |
|---|---|---|---|
| **Beispiel** | **T [°C]** | **η* [°C]** | **Restviskosität [%]** |
| | | | η*(200 °C)/η*(190 °C) oder η*(240 °C)/η*(190 °C) |
| 9* | 189,2 | 258 | |
| | 201,3 | 168 | 65 |
| | 240,4 | 10 | 4 |
| Farsoon FS 3300 PA | 189,3 | 212 | |
| | 201,2 | 157 | 74 |
| | 240,2 | 78 | 37 |
| 15 | 189,6 | 0,048 | |
| | 199,8 | 0,034 | 83 |
| | 240 | 0,013 | 27 |
| 16 | 189,6 | 0,12 | |
| | 199,7 | 0,11 | 92 |
| | 240 | 0,04 | 33 |
| 17 | 190 | 127 | |
| | 200 | 479 | 377 |
| | 240 | 2548 | 2006 |
| 18 | 189,6 | 1,78 | |
| | 199,8 | 1,18 | 66 |
| | 240 | 0,18 | 10 |
| 19 | 189,6 | 0,26 | |
| | 199,7 | 0,18 | 69 |
| | 240 | 0,07 | 27 |
| 20* | 189,6 | 217 | |
| | 199,7 | 131 | 60 |
| | 240 | 4 | 2 |
| 21* | 189,6 | 116 | |
| | 199,7 | 73 | 63 |
| | 240 | 3 | 3 |
| 22 | 189,6 | 234792 | |
| | 199,8 | 65598 | 28 |
| | 240 | 52 | <1 |

Den unter Beispiel 20 und 21 sowie Vergleichsbeispielen 18 und 19 hergestellten Materialien wurden 0,2 Gew.-%, bezogen auf TPU, hydrophobierter pyrogener Kieselsäure als Fließmittel (Aerosil^{®} R972 von Evonik) zugegeben und die Mischung mechanisch unter Tiefkälte (kryogener Zerkleinerung) in einer Stiftmühle zu Pulver verarbeitet und anschließend durch eine Siebmaschine klassifiziert. 90 Gew.-% des Mittels von 20 und 21 hatten einen Teilchendurchmesser von kleiner 140 µm (gemessen mittels Laserbeugung (HELOS - Partikelgrößenanalyse)). Diese hohe Pulverausbeute zeichnet die erfindungsgemäßen Produkte im Gegensatz zu herkömmlichen TPU aus, wo häufig deutlich kleinere Produktausbeuten erreicht werden, bzw. die Produkte mehrfach zerkleinert werden müssen, um in ausreichender Menge, die gewünschten Eigenschaften zu erhalten. Auch die hier geprüften nicht erfindungsgemäßen Vergleichsbeispiele 18 und 19 haben eine hohe Pulverausbeute, jedoch aufgrund der höheren Sprödigkeit einen nochmal deutlich höheren Feinanteil, der beim Lasersintern zu deutlichen Pulverfahnen während des Sinterns führt.

Es wurden den erhaltenen Materialien S2-Prüfstäbe im Pulversinterverfahren hergestellt.

Die erhaltenen Pulvermaterialien wurden vor jedem Sinterversuch gesiebt und unter Schutzgasatmosphäre (Stickstoff) in das Vorlagebehältnis des verwendeten 3D-Pulverdruckers gegeben. Während des gesamten Druckvorgangs waren Vorlage, Bauraum und Überlauf unter Schutzgas. Der Bauraum wurde auf die Bauraumtemperatur (siehe Tabelle 2) geheizt und ca. 30 min vor Beginn des Bauauftrages getempert. Die Sinterparameter sind ebenfalls der nachfolgenden Tabelle zu entnehmen. Nach Beendigung des 3D-Drucks wurde der Bauraum langsam unter Schutzgas abkühlen gelassen und der Pulverkuchen aus dem Bauraum entfernt. Die gesinterten Teile wurden erst grob mechanisch, dann mit Druckluft von überschüssigem Pulver befreit, bevor sie mechanischen Untersuchungen unterzogen wurden.

**Tabelle 2: Druckparameter und Druckergebnisse beim Pulverdruck von harten TPU**

| Erfindungsgemäße Beispiele sind mit * gekennzeichnet. | | | | | | |
|---|---|---|---|---|---|---|
| Probe | Zugversuch Modul (MPa) | Zugversuch Zugfestigkeit (N/mm) | Schüttdichte (g/cm3) | Druckteildichte (g/cm3) | Bauraumtemperatur (°C) | Laserleistung (W) |
| | | | | | | 2 Laser-Scans |
| 20* | 1470 | 33 | 0,47 | 1,103 | 158 | 28/28 |
| 21* | 1570 | 15 | 0,48 | 1,061 | 158 | 36/28 |
| 19 | zu spröde | zu spröde | 0,49 | 1,025 | 145 | 20/20 |
| 18 | zu spröde | zu spröde | 0,49 | 1,031 | 145 | 20/20 |

## Patentansprüche

1. Verfahren zur Herstellung eines Gegenstands, umfassend den Schritt der Herstellung des Gegenstands mittels eines additiven Fertigungsverfahrens aus einem Aufbaumaterial,
**dadurch gekennzeichnet, dass**
das Aufbaumaterial ein erstes Polyurethanpolymer umfasst, welches ein mittels Elementaranalyse bestimmtes Gewichtsprozent-Verhältnis von O zu N von ≥ 2 bis ≤ 2,5 ein mittels Elementaranalyse bestimmtes Gewichtsverhältnis N zu C von ≥ 0,1 bis ≤ 0,25, eine mittels dynamischer Differenzkalorimetrie (differential scanning calorimetry), DSC, 2. Aufheizung mit Aufheizrate 5 K/min, bestimmte Halbwertsbreite des Schmelzpeaks von ≤ 20 K und eine mittels dynamischer Differenzkalorimetrie (differential scanning calorimetry), DSC, 2. Aufheizung) bei einer Aufheiz- und Abkühlrate von 20 K/min bestimmte Differenz aus der Schmelztemperatur und der Rekristallisationstemperatur von ≥ 5 K und ≤ 100 K aufweist.

2. Verfahren gemäß Anspruch 1, **dadurch gekennzeichnet, dass** das erste Polyurethanpolymer einen Anteil an Hartsegmenten, ausgedrückt als Gewichtsverhältnis der Summe von aus Zerewitinoff-aktiven Verbindungen mit drei oder weniger Wiederholungseinheiten im Molekül stammenden Bestandteilen und der mit ihnen verbundenen Isocyanatbausteine zum Gesamtgewicht des Polyurethanpolymers, von ≥ 80 Gewichts-% bis ≤ 100 Gewichts-% aufweist.

3. Verfahren gemäß Anspruch 1 oder 2, **dadurch gekennzeichnet, dass** das erste Polyurethanpolymer aus der Reaktion einer Isocyanatkomponente mit ≥ 80 Gewichts-% aliphatischen Isocyanaten und einer gegenüber Isocyanaten reaktiven Komponente erhalten wurde.

4. Verfahren gemäß einem der vorgehenden Ansprüche, **dadurch gekennzeichnet, dass** das erste Polyurethanpolymer aus der Reaktion einer Isocyanatkomponente mit ≥ 80 Gewichts-% linearen aliphatischen Isocyanaten und einer gegenüber Isocyanaten reaktiven Komponente mit ≥ 80 Gewichts-% linearen aliphatischen Polyolen erhalten wurde.

5. Verfahren gemäß einem der vorgehenden Ansprüche, **dadurch gekennzeichnet, dass** das erste Polyurethanpolymer aus der Reaktion einer linearen Diisocyanatkomponente mit ≥ 80 Gewichts-% der einen linearen aliphatischen Isocyanat Komponente und einer linearen Diolkomponente mit ≥ 80 Gewichts-% der einen linearen aliphatischen Polyol Komponente erhalten wurde.

6. Verfahren gemäß einem der vorhergehenden Ansprüche, **dadurch gekennzeichnet, dass** das Aufbaumaterial einen mittels dynamischer Differenzkalorimetrie (differential scanning calorimetry), DSC, 2. Aufheizung mit Aufheizrate 20 K/min, bestimmten Schmelzpunkt von ≥ 120 °C bis ≤ 189 °C aufweist und die Halbwertsbreite des Schmelzpunktpeaks mittels dynamischer Differenzkalorimetrie DSC, 2. Aufheizung mit Aufheizrate 5 K/min, des Aufbaumaterials ≥ 5 K bis ≤ 20 K beträgt.

7. Verfahren gemäß einem der vorhergehenden Ansprüche, **dadurch gekennzeichnet, dass** das Aufbaumaterial nach 1000 Stunden SAE J 1960 CAM 180-Bewitterung eine Farbzahl-Zunahme von ≤ 50 im b-Wert aufweist.

8. Verfahren gemäß einem der vorhergehenden Ansprüche, **dadurch gekennzeichnet, dass** die komplexe Viskosität des geschmolzenen Aufbaumaterials, bestimmt durch ein Platte/Platte-Rheometer bei 1/s,0,1% Amplitude bei 200 °C nach jeweils 1 Minute gemessen, noch ≥ 50% der komplexen Viskosität des geschmolzenen Aufbaumaterials gemessen bei 190 °C beträgt und die komplexe Viskosität des geschmolzenen Aufbaumaterials gemessen bei 240 °C nur noch ≤ 15% der komplexen Viskosität des geschmolzenen Aufbaumaterials gemessen bei 190 °C beträgt.

9. Verfahren gemäß Anspruch 8, **dadurch gekennzeichnet, dass** die komplexe Viskosität des geschmolzenen Aufbaumaterials bei 240 °C nach Abkühlung auf 190 °C nach 1 Minute ≥ 50% der Ausgangsviskosität gemäß ISO 6721-10:2015-09 bei 1/s und 0,1% Deformation bei 190 °C wieder erreicht.

10. Verfahren gemäß einem der Ansprüche 1 bis 9, **dadurch gekennzeichnet, dass** die Herstellung des Gegenstands mittels des additiven Fertigungsverfahrens die Schritte umfasst:
- Auftragen einer Schicht aus, das Aufbaumaterial aufweisenden, Partikeln auf eine Zielfläche;
- gegebenenfalls Aufdrucken eines Strahlungsenergie absorbierenden und/oder Strahlungsenergie reflektierenden Materials auf einen ausgewählten Teil der Schicht und Einwirken von Energie auf die Schicht wobei der ausgewählte Teil der Schicht bevorzugt eine höhere oder niedrigere Absorption der Energie aufweist, so dass die Partikel im ausgewählten Teil oder den ausgewählten Teil umgebend entsprechend einem Querschnitt des Gegenstandes verbunden werden;
- Einwirken von Energie auf einen ausgewählten Teil der Schicht, entsprechend einem Querschnitt des Gegenstands, so dass die Partikel im ausgewählten Teil verbunden werden;
- Wiederholen der Schritte des Auftragens und des Einwirkens von Energie für eine Mehrzahl von Schichten, so dass die verbundenen Teile der benachbarten Schichten sich verbinden, um den Gegenstand zu bilden.

11. Verfahren gemäß einem der Ansprüche 1 bis 9, **dadurch gekennzeichnet, dass** die Herstellung des Gegenstands mittels des additiven Fertigungsverfahrens die Schritte umfasst:
- Auftragen eines Filaments eines zumindest teilweise geschmolzenen Aufbaumaterials auf einen Träger, so dass eine Lage des Aufbaumaterials erhalten wird, welche einem ersten ausgewählten Querschnitt des Gegenstands entspricht;
- Optional Auftragen eines Filaments des zumindest teilweise geschmolzenen Aufbaumaterials auf eine zuvor aufgetragene Lage des Aufbaumaterials, so dass eine weitere Lage des Aufbaumaterials erhalten wird, welche einem weiteren ausgewählten Querschnitt des Gegenstands entspricht und welche mit der zuvor aufgetragenen Lage verbunden ist;
- Optional Wiederholen des Schritts des Auftragens eines Filaments des zumindest teilweise geschmolzenen Aufbaumaterials auf eine zuvor aufgetragene Lage des Aufbaumaterials, bis der Gegenstand gebildet ist.

12. Verfahren gemäß einem der Ansprüche 1 bis 11, **dadurch gekennzeichnet, dass** das Verfahren innerhalb eines Bauraums durchgeführt wird und die Temperatur des Bauraums ≥ 5 °C geringer ist als die Schmelztemperatur Tₘ des Aufbaumaterials, bestimmt mittels dynamischer Differenzkalorimetrie DSC; gemäß DIN EN ISO 11357-1:2017-02 bei einer Heizrate von 20 °C/min.

13. Gegenstand, erhältlich durch ein Verfahren gemäß einem der Ansprüche 1 bis 12, **dadurch gekennzeichnet, dass** der Gegenstand aus einem Aufbaumaterial hergestellt ist, welches ein erstes Polyurethanpolymer umfasst, welches ein mittels Elementaranalyse bestimmtes Gewichtsprozent-Verhältnis von O zu N von ≥ 2 bis ≤ 2,5, ein mittels Elementaranalyse bestimmtes Gewichtsverhältnis N zu C von ≥ 0,1 bis ≤ 0,25, eine mittels dynamischer Differenzkalorimetrie, DSC, 2. Aufheizung mit Aufheizrate 5 K/min, bestimmte Halbwertsbreite des Schmelzpeaks von ≤ 20 K und eine mittels dynamischer Differenzkalorimetrie, DSC, 2. Aufheizung bei einer Aufheiz- und Abkühlrate von 20 K/min bestimmte Differenz aus der Schmelztemperatur und der Rekristallisationstemperatur von ≥ 5 K und ≤ 100 K aufweist und wobei der Gegenstand in Aufbaurichtung des in seiner Herstellung eingesetzten additiven Herstellungsverfahrens eine Zugfestigkeit nach ISO 527:2012 aufweist, welche ≥ 20% bis ≤ 100% der Zugfestigkeit nach ISO 527:2012 eines spritzgegossenen Probenkörpers aus dem gleichen Aufbaumaterial beträgt.

14. Gegenstand gemäß Anspruch 13, **dadurch gekennzeichnet, dass** das erste Polyurethanpolymer einen Anteil an Hartsegmenten, ausgedrückt als Gewichtsverhältnis der Summe von aus Zerewitinoff-aktiven Verbindungen mit drei oder weniger Wiederholungseinheiten im Molekül stammenden Bestandteilen und der mit ihnen verbundenen Isocyanatbausteine zum Gesamtgewicht des Polyurethanpolymers, von ≥ 80 Gewichts-% bis ≤ 100 Gewichts-% aufweist.

15. Gegenstand gemäß Anspruch 12, 13 oder 14, **dadurch gekennzeichnet, dass** das erste Polyurethanpolymer aus der Reaktion einer Isocyanatkomponente mit ≥ 80 Gewichts-% linearen aliphatischen Isocyanaten und einer gegenüber Isocyanaten reaktiven Komponente mit ≥ 80 Gewichts-% linearen aliphatischen Polyolen erhalten wurde.

## Claims

1. Process for producing an article comprising the step of producing the article by means of an additive manufacturing process from a build material, **characterized in that**
the build material comprises a first polyurethane polymer which has a percent by weight ratio of O to N determined by elemental analysis of ≥ 2 to ≤ 2.5, a weight ratio of N to C determined by elemental analysis of ≥ 0.1 to ≤ 0.25, a full width at half maximum of the melting peak determined by differential scanning calorimetry, DSC, 2nd heating at a heating rate of 5 K/min, of ≤ 20 K and a difference between the melting temperature and the recrystallization temperature determined by differential scanning calorimetry, DSC, 2nd heating at a heating and cooling rate of 20 K/min, of ≥ 5 K and ≤ 100 K.

2. Process according to Claim 1, **characterized in that** the first polyurethane polymer comprises a proportion of hard segments, expressed as the weight ratio of the sum of constituents derived from Zerewitinoff-active compounds having three or fewer repeating units in the molecule and the isocyanate units joined thereto to the total weight of the polyurethane polymer, of ≥ 80% by weight to ≤ 100% by weight.

3. Process according to Claim 1 or 2, **characterized in that** the first polyurethane polymer has been obtained from the reaction of an isocyanate component comprising ≥ 80% by weight of aliphatic isocyanates and an isocyanate-reactive component.

4. Process according to any of the preceding claims, **characterized in that** the first polyurethane polymer has been obtained from the reaction of an isocyanate component comprising ≥ 80% by weight of linear aliphatic isocyanates and an isocyanate-reactive component comprising ≥ 80% by weight of linear aliphatic polyols.

5. Process according to any of the preceding claims, **characterized in that** the first polyurethane polymer has been obtained from the reaction of a linear diisocyanate component comprising ≥ 80% by weight of the one linear aliphatic isocyanate component and a linear diol component comprising ≥ 80% by weight of the one linear aliphatic polyol component.

6. Process according to any of the preceding claims, **characterized in that** the build material has a melting point determined by differential scanning calorimetry, DSC, 2nd heating at a heating rate of 20 K/min, of ≥ 120°C to ≤ 189°C and the full width at half maximum of the melting point peak by means of differential scanning calorimetry DSC, 2nd heating at a heating rate of 5 K/min, of the build material is ≥ 5 K to ≤ 20 K.

7. Process according to any of the preceding claims, **characterized in that** the build material exhibits after 1000 hours of SAE J 1960 CAM 180 weathering a colour number increase of ≤ 50 in the b value.

8. Process according to any of the preceding claims, **characterized in that** the complex viscosity of the molten build material determined via a plate/plate rheometer at 1/s and 0.1% amplitude at 200°C, measured after 1 minute in each case, is still ≥ 50% of the complex viscosity of the molten build material measured at 190°C and the complex viscosity of the molten build material measured at 240°C is only ≤ 15% of the complex viscosity of the molten build material measured at 190°C.

9. Process according to Claim 8, **characterized in that** the complex viscosity of the molten build material at 240°C regains ≥ 50% of the starting viscosity according to ISO 6721-10:2015-09 at 1/s and 0.1% deformation at 190°C after 1 minute after cooling to 190°C.

10. Process according to any of Claims 1 to 9, **characterized in that** the production of the article by means of the additive manufacturing process comprises the steps of:
- depositing a layer of particles comprising the build material to a target surface;
- optionally printing a radiant energy-absorbing and/or radiant energy-reflecting material onto a selected portion of the layer and applying energy to the layer, wherein the selected portion of the layer preferably exhibits a higher or lower absorption of the energy, so that the particles in the selected portion or surrounding the selected portion are joined according to a cross section of the article;
- applying energy to a selected portion of the layer corresponding to a cross section of the article to join the particles in the selected portion;
- repeating the steps of depositing and applying energy for a plurality of layers to join the joined portions of the adjacent layers to form the article.

11. Process according to any of Claims 1 to 9, **characterized in that** the production of the article by means of the additive manufacturing process comprises the steps of:
- applying a filament of an at least partially molten build material to a carrier to obtain a layer of the build material corresponding to a first selected cross section of the article;
- optionally applying a filament of the at least partially molten build material to a previously applied layer of the build material to obtain a further layer of the build material which corresponds to a further selected cross section of the article and is joined to the previously applied layer;
- optionally repeating the step of applying a filament of the at least partially molten build material to a previously applied layer of the build material until the article has been formed.

12. Process according to any of Claims 1 to 11, **characterized in that** the process is performed inside a build space and the temperature of the build space is ≥ 5°C lower than the melting temperature Tₘ of the build material, determined by differential scanning calorimetry DSC; according to DIN EN ISO 11357-1:2017-02 at a heating rate of 20°C/min.

13. Article obtainable by a process according to any of Claims 1 to 12, **characterized in that** the article is produced from a build material comprising a first polyurethane polymer which has a percent by weight ratio of O to N determined by elemental analysis of ≥ 2 to ≤ 2.5, a weight ratio of N to C determined by elemental analysis of ≥ 0.1 to ≤ 0.25, a full width at half maximum of the melting peak determined by differential scanning calorimetry, DSC, 2nd heating at a heating rate of 5 K/min, of ≤ 20 K and a difference between the melting temperature and the recrystallization temperature determined by differential scanning calorimetry, DSC, 2nd heating at a heating and cooling rate of 20 K/min, of ≥ 5 K and ≤ 100 K and wherein the article has a tensile strength according to ISO 527:2012 in the build direction of the additive manufacturing process used in its production which is ≥ 20% to ≤ 100% of the tensile strength according to ISO 527:2012 of an injection moulded test specimen made of the same build material.

14. Article according to Claim 13, **characterized in that** the first polyurethane polymer comprises a proportion of hard segments, expressed as the weight ratio of the sum of constituents derived from Zerewitinoff-active compounds having three or fewer repeating units in the molecule and the isocyanate units joined thereto to the total weight of the polyurethane polymer, of ≥ 80% by weight to ≤ 100% by weight.

15. Article according to Claim 12, 13 or 14, **characterized in that** the first polyurethane polymer has been obtained from the reaction of an isocyanate component comprising ≥ 80% by weight of linear aliphatic isocyanates and an isocyanate-reactive component comprising ≥ 80% by weight of linear aliphatic polyols.

## Revendications

1. Procédé de fabrication d'un objet, comprenant l'étape de la fabrication de l'objet au moyen d'un procédé de fabrication additive à partir d'un matériau de construction,
**caractérisé en ce que**
le matériau de construction comprend un premier polymère de polyuréthane, qui présente un rapport de pourcentages en poids, déterminés par analyse élémentaire, de O à N ≥ 2 à ≤ 2,5, un rapport pondéral, déterminé par analyse élémentaire, de N à C ≥ 0,1 à ≤ 0,25, une largeur à mi-hauteur du pic de fusion, déterminé par calorimétrie différentielle à balayage dynamique (differential scanning calorimetry), DSC, 2e chauffage à une vitesse de chauffage de 5 K/min, ≤ 20 K et une différence de la température de fusion et de la température de recristallisation, déterminées par calorimétrie différentielle à balayage dynamique (differential scanning calorimetry), DSC, 2e chauffage à une vitesse de chauffage et de refroidissement de 20 K/min, ≥ 5 K et ≤ 100 K.

2. Procédé selon la revendication 1, **caractérisé en ce que** le premier polymère de polyuréthane présente une proportion de segments durs, exprimée comme rapport pondéral de la somme de constituants provenant de composés actifs selon Zerewitinoff présentant trois motifs récurrents ou moins dans la molécule et des éléments isocyanate reliés à ceux-ci au poids total du polymère de polyuréthane ≥ 80 % en poids à ≤ 100 % en poids.

3. Procédé selon la revendication 1 ou 2, **caractérisé en ce que** le premier polymère de polyuréthane a été obtenu à partir de la réaction d'un composant isocyanate présentant ≥ 80 % en poids d'isocyanates aliphatiques et d'un composant réactif vis-à-vis des isocyanates.

4. Procédé selon l'une des revendications précédentes, **caractérisé en ce que** le premier polymère de polyuréthane a été obtenu à partir de la réaction d'un composant isocyanate présentant ≥ 80 % en poids d'isocyanates aliphatiques linéaires et d'un composant réactif vis-à-vis des isocyanates présentant ≥ 80 % en poids de polyols aliphatiques linéaires.

5. Procédé selon l'une des revendications précédentes, **caractérisé en ce que** le premier polymère de polyuréthane a été obtenu à partir de la réaction d'un composant diisocyanate linéaire présentant ≥ 80 % en poids dudit un composant isocyanate aliphatique linéaire et d'un composant diol linéaire présentant ≥ 80 % en poids dudit un polyol aliphatique linéaire.

6. Procédé selon l'une des revendications précédentes, **caractérisé en ce que** le matériau de construction présente un point de fusion, déterminé par colorimétrie différentielle à balayage dynamique (differential scanning calorimetry), DSC, 2e chauffage à une vitesse de chauffage de 20 K/min, ≥ 120 °C à ≤ 189 °C et la largeur à mi-hauteur du pic de point de fusion, déterminé par calorimétrie différentielle à balayage dynamique DSC, 2e chauffage à une vitesse de chauffage de 5 K/min, du matériau de construction, est ≥ 5 K à ≤ 20 K.

7. Procédé selon l'une des revendications précédentes, **caractérisé en ce que** le matériau de construction présente une augmentation de l'indice de couleur, après 1000 heures de soumission aux intempéries selon la norme SAE J 1960 CAM 180, ≤ 50 dans la valeur b.

8. Procédé selon l'une des revendications précédentes, **caractérisé en ce que** la viscosité complexe du matériau de construction fondu, déterminée par un rhéomètre à plaque/plaque, à 1/s, amplitude de 0,1 %, mesurée à 200 °C après à chaque fois 1 minute, représente encore ≥ 50 % de la viscosité complexe du matériau de construction fondu mesurée à 190 °C et la viscosité complexe du matériau de construction fondu, mesurée à 240 °C, ne représente plus que ≤ 15 % de la viscosité complexe du matériau de construction fondu à 190 °C.

9. Procédé selon la revendication 8, **caractérisé en ce que** la viscosité complexe du matériau de construction fondu à 240 °C après refroidissement à 190 °C après 1 minute atteint de nouveau ≥ 50 % de la viscosité de départ déterminée selon la norme ISO 6721-10:2015-09 à 1/s et à une déformation de 0,1 % à 190 °C.

10. Procédé selon l'une des revendications 1 à 9, **caractérisé en ce que** la fabrication de l'objet au moyen du procédé de fabrication additive comprend les étapes de :
- application d'une couche de particules, présentant le matériau de construction, sur une surface cible ;
- le cas échéant impression d'un matériau absorbant l'énergie de rayonnement et/ou réfléchissant l'énergie de rayonnement sur une partie sélectionnée de la couche et action d'énergie sur la couche, la partie sélectionnée de la couche présentant de préférence une absorption d'énergie supérieure ou inférieure de telle sorte que les particules dans la partie sélectionnée ou entourant la partie sélectionnée sont reliées selon une section transversale de l'objet ;
- action de l'énergie sur une partie sélectionnée de la couche, selon une section transversale de l'objet, de telle sorte que les particules dans la partie sélectionnée sont reliées ;
- répétition des étapes d'application et d'action d'énergie pour une pluralité de couches, de telle sorte que les parties reliées des couches adjacentes se relient, afin de construire l'objet.

11. Procédé selon l'une des revendications 1 à 9, **caractérisé en ce que** la fabrication de l'objet au moyen du procédé de fabrication additive comprend les étapes de :
- l'application d'un filament d'un matériau de construction au moins partiellement fondu sur un support, de manière à obtenir une strate du matériau de construction, qui correspond à une première section transversale sélectionnée de l'objet ;
- application optionnelle d'un filament du matériau de construction au moins partiellement fondu sur une strate précédemment appliquée du matériau de construction, de manière à obtenir une autre strate du matériau de construction, qui correspond à une autre section transversale sélectionnée de l'objet et qui est reliée à la strate précédemment appliquée ;
- répétition optionnelle de l'étape de l'application d'un filament du matériau de construction au moins partiellement fondu sur une strate précédemment appliquée du matériau de construction, jusqu'à ce que l'objet soit construit.

12. Procédé selon l'une des revendications 1 à 11, **caractérisé en ce que** le procédé est effectué à l'intérieur d'une chambre de construction et la température de la chambre de construction est inférieure de ≥ 5 °C à la température de fusion Tₘ du matériau de construction, déterminée par calorimétrie différentielle à balayage dynamique, DSC, selon la norme DIN EN ISO 11357-1:2017-02 à une vitesse de chauffage de 20 °C/min.

13. Objet, pouvant être obtenu par un procédé selon l'une des revendications 1 à 12, **caractérisé en ce que** l'objet est fabriqué à partir d'un matériau de construction, qui comprend un premier polymère de polyuréthane, qui présente un rapport de pourcentages en poids, déterminés par analyse élémentaire, de O à N ≥ 2 à ≤ 2,5, un rapport pondéral, déterminé par analyse élémentaire, de N à C ≥ 0,1 à ≤ 0,25, une largeur à mi-hauteur du pic de fusion, déterminé par calorimétrie différentielle à balayage dynamique (differential scanning calorimetry), DSC, 2e chauffage à une vitesse de chauffage de 5 K/min, ≤ 20 K et une différence de la température de fusion et de la température de recristallisation, déterminées par calorimétrie différentielle à balayage dynamique (differential scanning calorimetry), DSC, 2e chauffage à une vitesse de chauffage er de refroidissement de 20 K/min, ≥ 5 K et ≤ 100 K et l'objet présentant, dans la direction de construction du procédé de fabrication additive utilisé dans sa fabrication, une résistance à la traction selon la norme ISO 527:2012, qui représente ≥ 20 % à ≤ 100 % de la résistance à la traction selon le norme ISO 527:2012 d'une éprouvette moulée par injection constituée par le même matériau de construction.

14. Objet selon la revendication 13, **caractérisé en ce que** le premier polymère de polyuréthane présente une proportion de segments durs, exprimée comme rapport pondéral de la somme de constituants provenant de composés actifs selon Zerewitinoff présentant trois motifs récurrents ou moins dans la molécule et des éléments isocyanate reliés à ceux-ci au poids total du polymère de polyuréthane de ≥ 80 % en poids à ≤ 100 % en poids.

15. Objet selon la revendication 12, 13 ou 14, **caractérisé en ce que** le premier polymère de polyuréthane a été obtenu à partir de la réaction d'un composant isocyanate présentant ≥ 80 % en poids d'isocyanates aliphatiques linéaires et d'un composant réactif vis-à-vis des isocyanates présentant ≥ 80 % en poids de polyols aliphatiques linéaires.
